# EUROPEAN PATENT APPLICATION

(11) **EP 4 378 744 A1**
(43) Date of publication of application: **05.06.2024**
(21) Application number: 23210625.2
(22) Date of filing: 17.11.2023
(51) Int. Cl.: B60L 53/00, B60L 53/20, B60L 1/00, B60L 53/14, B60L 53/16, B60L 53/22

(54) **VEHICLE-MOUNTED CHARGING APPARATUS AND VEHICLE**

(30) Priority: 30.11.2022 CN 202223196846 U
(71) Applicant: Huawei Digital Power Technologies Co., Ltd., Shenzhen, 518043 (CN)
(72) Inventor: LI, Ping, Shenzhen, 518043 (CN); LIANG, Tao, Shenzhen, 518043 (CN); FENG, Ningbo, Shenzhen, 518043 (CN)
(74) Representative: Epping - Hermann - Fischer

(57) **Abstract**

This application provides a vehicle-mounted charging apparatus and a vehicle. The vehicle-mounted charging apparatus includes a power conversion circuit and a housing. The housing is configured to accommodate the power conversion circuit. The power conversion circuit is configured to convert an input power supply into at least one of a first direct current or a second direct current. A voltage of the first direct current is lower than a voltage of the second direct current. A plurality of electrical interfaces are disposed on an electrical interface mounting surface in the housing. The plurality of electrical interfaces include one input power interface, two first direct current output interfaces, and one second direct current output interface. The input power interface is configured to be connected to an input end of the power conversion circuit. The first direct current output interface is configured to receive the first direct current and supply power to a first-type load. The second direct current output interface is configured to receive the second direct current and supply power to a second-type load. In this application, the plurality of electrical interfaces are disposed on a same surface, so that the external interfaces are appropriately arranged and highly integrated. This facilitates a vehicle layout, improves assembly simplicity, and reduces costs.

## Description

### TECHNICAL FIELD

This application relates to the field of vehicle technologies, and in particular, to a vehicle-mounted charging apparatus and a vehicle.

### BACKGROUND

A vehicle-mounted charging apparatus is an important part of an electric vehicle. The vehicle-mounted charging apparatus provides electric energy transmitted by a power supply for an electrical component of the electric vehicle. To implement a power supply function, various electrical interfaces are generally disposed outside the vehicle-mounted charging apparatus at present. As the electric vehicle is equipped with increasingly more functions, a quantity of electrical interfaces that are configured to be electrically connected to a low-voltage load and that are outside the vehicle-mounted charging apparatus gradually increases. In addition, because a component inside the vehicle-mounted charging apparatus generates a large amount of heat when the component is in a working state, a mechanical interface for coolant to flow in or flow out needs to be disposed outside the vehicle-mounted charging apparatus. If a complex layout of the electrical interface is not adjusted and optimized, space that is used for disposing the mechanical interface and that is outside the vehicle-mounted charging apparatus may be limited. Consequently, a volume of the vehicle-mounted charging apparatus becomes large. This is not conducive to a vehicle layout and assembly, and an excessively large volume also leads to higher costs.

### SUMMARY

This application provides a vehicle-mounted charging apparatus. External interfaces of the vehicle-mounted charging apparatus are appropriately arranged and highly integrated. This facilitates a vehicle layout, improves assembly simplicity, and reduces costs.

According to a first aspect, this application provides a vehicle-mounted charging apparatus for an electric vehicle, including a power conversion circuit and a housing. The housing is configured to accommodate the power conversion circuit, the housing includes an electrical interface mounting surface, a plurality of electrical interfaces are disposed on the electrical interface mounting surface, and the plurality of electrical interfaces include one input power interface, two first direct current output interfaces, and one second direct current output interface. These electrical structures provide electric energy transmission channels for the vehicle-mounted charging apparatus to supply power to a load. The input power interface is configured to be connected to an input end of the power conversion circuit, and receive an input power supply. The power conversion circuit is configured to convert the input power supply into at least one of a first direct current or a second direct current. A voltage of the first direct current is lower than a voltage of the second direct current. Each first direct current output interface is configured to receive the first direct current and supply power to a first-type load of the electric vehicle. The second direct current output interface is configured to receive the second direct current and supply power to a second-type load of the electric vehicle.

In this application, two first direct current output interfaces are disposed on a same side of the vehicle-mounted charging apparatus. In comparison with only one direct current output interface disposed outside the vehicle-mounted charging apparatus, the vehicle-mounted charging apparatus in this application may simultaneously supply power to more first-type loads, to meet a charging requirement of a low-voltage load. In addition, in comparison with the plurality of electrical interfaces disposed on different sides of the vehicle-mounted charging apparatus, in the vehicle-mounted charging apparatus of this application, the input power interface, the two first direct current output interfaces, and the second direct current output interface are disposed on a same electrical interface mounting surface, so that the electrical interfaces are distributed in a more centralized manner, and are highly integrated. An electrical connection operation is simple, space utilization of the electrical interface mounting surface is high, and space is provided for disposing different types of external interfaces on other surfaces. This helps reduce a volume of the vehicle-mounted charging apparatus, so that the vehicle-mounted charging apparatus is highly integrated, and helps facilitate a vehicle layout, improve assembly simplicity of the vehicle, and reduce costs.

In a possible implementation, the input power interface is electrically connected to a power supply, and is configured to transmit an alternating current to the power conversion circuit. The two first direct current output interfaces are electrically connected to two first-type loads, the first-type load receives the first direct current transmitted by the first direct current output interface, and the two first direct current output interfaces are respectively electrically connected to the two first-type loads, to supply power to the first-type load. The second direct current output interface is electrically connected to the second-type load, and the second-type load receives the second direct current transmitted by the second direct current output interface. The voltage of the first direct current is lower than the voltage of the second direct current. The first-type load is the low-voltage load, and the second-type load is a high-voltage load. In an implementation, a voltage of the first direct current is 12 V, and a voltage of the second direct current is 200 V to 750 V In another implementation, specific voltage values of the first direct current and the second direct current may be set based on a requirement, but the voltage of the first direct current needs to be less than the voltage of the second direct current.

In a possible implementation, the power conversion circuit includes a vehicle-mounted charging module and a direct current conversion module. The vehicle-mounted charging module is configured to convert, into a direct current, the alternating current input from the input power interface. The direct current conversion module is configured to convert the direct current into the first direct current and the second direct current, and separately supply power to the first-type load and the second-type load through the first direct current output interface and the second direct current output interface. The input power interface is an alternating current input interface, and is configured to receive the alternating current provided by the power supply and transmit the alternating current to the vehicle-mounted charging module. The vehicle-mounted charging module is configured to convert the alternating current into the direct current.

In a possible implementation, the power conversion circuit includes a vehicle-mounted charging module and a direct current conversion module. The vehicle-mounted charging module is configured to convert, into the first direct current, the alternating current input from the input power interface, and supply power to the first-type load, and the direct current conversion module is configured to convert the first direct current into the second direct current and supply power to the second-type load. The input power interface is the alternating current input interface, and is configured to receive the alternating current provided by the power supply and transmit the alternating current to the vehicle-mounted charging module. The vehicle-mounted charging module is configured to convert the alternating current into the first direct current.

In a possible implementation, the two first direct current output interfaces, the input power interface, and the second direct current output interface are spaced from each other on the electrical interface mounting surface, and a spacing between the input power interface and the second direct current output interface is greater than a spacing between the two first direct current output interfaces.

The input power interface and the second direct current output interface are configured to transmit power energy, and belong to a high-voltage system. The two first direct current output interfaces are configured to be electrically connected to the low-voltage load, and belong to a low-voltage system. In this implementation, the two first direct current output interfaces, the input power interface, and the second direct current output interface are spaced from each other. This helps avoid interference caused by the high-voltage system to the low-voltage system.

Electrical interference generated between high-voltage systems is greater than interference generated by a high voltage to a low voltage. Therefore, in this implementation, the spacing between the input power interface and the second direct current output interface is set to be greater than the spacing between the two first direct current output interfaces. In this way, an accident can be prevented, and safety performance of the vehicle-mounted charging apparatus and the vehicle is improved.

In a possible implementation, the electrical interface mounting surface includes a bottom edge and a top edge that are disposed opposite to each other, the two first direct current output interfaces are aligned along one of the bottom edge and the top edge, and the input power interface and the second direct current output interface are aligned along the other one of the bottom edge and the top edge.

The electrical interface mounting surface on which the electrical interface is located includes the bottom edge and the top edge that are disposed opposite to each other, and two edges that are disposed opposite to each other between the bottom edge and the top edge are two side edges. A direction from the top edge to the bottom edge is designated as a first direction. A direction from one side edge to the other side edge is designated as a second direction. The first direction is perpendicular to the second direction.

In this implementation, the two first direct current output interfaces are arranged close to the bottom edge and are aligned in the second direction, and the input power interface and the second direct current output interface are arranged close to the top edge and are aligned in the second direction. In this solution, the input power interface and the second direct current output interface that belong to the high-voltage system and the two first direct current output interfaces that belong to the low-voltage system are mutually staggered in the first direction, to improve electrical insulation. In this way, the accident can be prevented, and the safety performance of the vehicle-mounted charging apparatus and the vehicle is improved.

In another implementation, the two first direct current output interfaces are arranged close to the top edge and are aligned in the second direction, and the input power interface and the second direct current output interface are arranged close to the bottom edge and are aligned in the second direction. Alignment in the second direction indicates that a connection line between centers of the two electrical interfaces is parallel to the second direction. In this solution, the two first direct current output interfaces and the input power interface, and the second direct current output interface are respectively disposed on the bottom edge and the top edge of the electrical interface mounting surface, so that the input power interface and the second direct current output interface that belong to the high-voltage system and the two first direct current output interfaces that belong to the low-voltage system are mutually staggered in the first direction, to improve the electrical insulation. In this way, the accident can be prevented, and the safety performance of the vehicle-mounted charging apparatus and the vehicle is improved. In addition, this also helps provide the space for disposing another electrical interface on the electrical interface mounting surface, and improve integration of the vehicle-mounted charging apparatus.

In an implementation, the housing includes legs that are spaced from each other, and the leg is configured to support and fasten the vehicle-mounted charging apparatus. A side close to the leg is the bottom edge, and a side far away from the leg is the top edge.

In a possible implementation, a height of the electrical interface mounting surface is less than a sum of a height of one first direct current output interface and a height of the input power interface or the second direct current output interface. A width of the electrical interface mounting surface is greater than a sum of widths of the first direct current output interface and the input power interface or the second direct current output interface that are adjacently arranged. The input power interface and the second direct current output interface are respectively disposed close to two side edges of the electrical interface mounting surface. The two first direct current output interfaces are arranged close to a bottom edge or a top edge of the electrical interface mounting surface. The two first direct current output interfaces are arranged between the input power interface and the second direct current output interface. A part of the two first direct current output interfaces is located in an area between the input power interface and the second direct current output interface. The height is a distance in an arrangement direction between the bottom edge and the top edge of the electrical interface mounting surface. The width is a distance in an arrangement direction between the two side edges of the electrical interface mounting surface.

The height is a dimension value in the first direction. In this implementation, the height of the electrical interface mounting surface is a vertical distance between the bottom edge and the top edge. The height of the electrical interface mounting surface is less than the sum of the height of one first direct current output interface and the height of the input power interface or the second direct current output interface, so that the first direct current output interface and the input power interface or the second direct current output interface cannot be aligned in the first direction. The first direct current output interface is disposed between the input power interface and the second direct current output interface. In this way, electrical interfaces are compactly arranged in the first direction on the electrical interface mounting surface, and the height of the electrical interface mounting surface can be controlled within a small range when an electrical connection requirement is met.

The part of the two first direct current output interfaces is located in the area between the input power interface and the second direct current output interface, that is, projection that is of the two first direct current output interfaces and that is on the side edge in the second direction partially overlaps projection that is of the input power interface and the second direct current output interface and that is on the side edge in the second direction, so that a high-voltage interface and a low-voltage interface are arranged in a staggered manner in the first direction, to improve the space utilization of the electrical interface mounting surface.

The width is a dimension value in the second direction. In this implementation, the width of the electrical interface mounting surface is greater than the sum of the widths of the first direct current output interface and the input power interface or the second direct current output interface that are adjacently arranged, so that the electrical interface mounting surface is wide enough in the second direction, and the electrical interfaces can be spaced from each other in the second direction. In this way, the electrical interfaces are compactly arranged in the first direction on the electrical interface mounting surface, and are effectively spaced in the second direction. The width and the height of the electrical interface mounting surface can be controlled within a small range when an electrical connection safety specification is met. The input power interface and the second direct current output interface are respectively disposed in areas close to the two side edges, so that a spacing between two high-voltage interfaces can be effectively increased, and the electrical interference is prevented.

In this solution, the height, the width and layout of the electrical interface is appropriately set, and an area of the electrical interface mounting surface of the vehicle-mounted charging apparatus is fully used. This facilitates a miniaturization design of the vehicle-mounted charging apparatus and the vehicle layout, and also ensures electric isolation between the electrical interfaces, to improve the safety performance.

In a possible implementation, a plurality of identifier groups are further disposed on the electrical interface mounting surface, the plurality of identifier groups are used to identify functions of the plurality of electrical interfaces, and any one of the plurality of identifier groups is disposed between two adjacent ones of the plurality of electrical interfaces, or between any one of the plurality of electrical interfaces and the top edge of the electrical interface mounting surface, or between any one of the plurality of electrical interfaces and the bottom edge of the electrical interface mounting surface.

In this solution, without increasing the volume of the vehicle-mounted charging apparatus, the plurality of identifier groups are disposed at different positions of the electrical interface mounting surface, so that a remaining area of the electrical interface mounting surface except the electrical interface is flexibly used. The plurality of identifier groups are used to identify different electrical interfaces. This facilitates the electrical connection operation.

In a possible implementation, the plurality of identifier groups include a first direct current output interface identifier group, the first direct current output interface identifier group is disposed between the two first direct current output interfaces, and the first direct current output interface identifier group is used to identify functions of the two first direct current output interfaces.

In this implementation, a width of the first direct current output interface identifier group is less than a width of each first direct current output interface, a height of the first direct current output interface identifier group is less than a height of each first direct current output interface, and in the first direction, the first direct current output interface identifier group is closer to the side edges that are of the two first direct current output interfaces and that are close to a top plate. In this implementation, the first direct current output interface identifier group includes two rows of identifiers arranged in the first direction.

In this solution, without increasing the volume of the vehicle-mounted charging apparatus, the first direct current output interface identifier group is disposed between the two first direct current output interfaces, so that the remaining area of the electrical interface mounting surface except the electrical interface is flexibly used, and the first direct current output interface identifier group is set into two rows, to avoid occupying an excessive size in the second direction, and make full use of a spacing area between the two first direct current output interfaces. The first direct current output interface identifier group is used to identify the two first direct current output interfaces, to avoid a misoperation during use, and improve safety of electrical connection.

In a possible implementation, the plurality of identifier groups include an input power identifier group, the input power identifier group includes two rows of identifiers, and the two rows of identifiers are arranged in parallel between the input power interface and the top edge or the side edge of the electrical interface mounting surface.

In this implementation, a width of the input power identifier group is less than the width of the input power interface, and a height of the input power identifier group is less than the height of the input power interface.

In this implementation, the input power identifier group includes the two rows of identifiers arranged in the first direction, and the input power identifier group is set as the two rows of identifiers. This helps reduce the width of the input power identifier group and avoids occupying the excessive size in the second direction. A spacing area between the input power interface and the top edge or the bottom edge is fully used, so that an area occupied by the input power identifier group on the electrical interface mounting surface can be controlled within a small range.

In this solution, without increasing the volume of the vehicle-mounted charging apparatus, the input power identifier group is disposed between the input power interface and the bottom edge or the top edge of the electrical interface mounting surface, so that the remaining area of the electrical interface mounting surface except the electrical interface is flexibly used. The input power identifier group is used to identify the input power interface, to avoid the misoperation during use, and improve the safety of the electrical connection.

In a possible implementation, the plurality of identifier groups include a second direct current output interface identifier group, the second direct current output interface identifier group includes two rows of identifiers, and the two rows of identifiers are arranged in parallel between the second direct current output interface identifier group and the top edge or the side edge of the electrical interface mounting surface.

In this implementation, a width of the second direct current output interface identifier group is less than a width of the second direct current output interface, a height of the second direct current output interface identifier group is less than a height of the second direct current output interface.

In this implementation, the second direct current output interface identifier group includes the two rows of identifiers arranged in the first direction, and the second direct current output interface identifier group is set as the two rows of identifiers. This helps reduce the width of the second direct current output interface identifier group and avoids occupying the excessive size in the second direction. A spacing area between the second direct current output interface and the top edge or the bottom edge is fully used, so that an area occupied by the second direct current output interface identifier group on the electrical interface mounting surface can be controlled within a small range.

In this solution, without increasing the volume of the vehicle-mounted charging apparatus, the second direct current output interface identifier group is disposed between the second direct current output interface and the bottom edge or the top edge of the electrical interface mounting surface, so that the remaining area of the electrical interface mounting surface except the electrical interface is flexibly used. The second direct current output interface identifier group is used to identify the second direct current output interface, to avoid the misoperation during use, and improve the safety of the electrical connection.

In a possible implementation, the input power interface includes an input power interface housing and an input power interface electrochemical cell body. The input power interface electrochemical cell body is configured to be electrically connected to the input end of the power conversion circuit. The input power interface housing includes an input power interface housing body and an input power interface housing base that are integrally disposed. The input power interface electrochemical cell body is fastened to an inner side of the input power interface housing body. The input power interface housing body is shaped like a runway. The input power interface housing base is fastened to the electrical interface mounting surface. The input power interface housing base is rectangular. A width of the input power interface housing base is greater than a height of the input power interface housing base. The height is the distance in the arrangement direction between the bottom edge and the top edge of the electrical interface mounting surface. The width is the distance in the arrangement direction between the two side edges of the electrical interface mounting surface.

In this implementation, the input power interface housing base is fastened to the electrical interface mounting surface via four screws. The four screws are fastened to four corners of the input power interface housing base. The input power interface housing body is shaped like the runway, and four corners of the input power interface housing body are in arc shapes. This helps provide space for fastening the four corners of the input power interface housing base via the screws.

In this implementation, because the electrical interface mounting surface is a rectangle, that is, the width of the electrical interface mounting surface is greater than the height of the electrical interface mounting surface, the input power interface housing base is set to be rectangular, so that a long edge and a wide edge of the input power interface fit the electrical interface mounting surface. This helps reduce an area occupied by the input power interface in the first direction, and reserve space for disposing the input power identifier group.

In a possible implementation, each first direct current output interface includes a first direct current output interface housing and a first direct current output interface electrochemical cell body. The first direct current output interface electrochemical cell body is configured to be electrically connected to the power conversion circuit. The first direct current output interface housing includes a first direct current output interface housing body and a first direct current output interface housing base that are integrally disposed. The first direct current output interface electrochemical cell body is fastened to an inner side of the first direct current output interface housing body. The first direct current output interface housing body is circular. The first direct current output interface housing base is fastened to the electrical interface mounting surface. The first direct current output interface housing base is square, and four corners of the first direct current output interface housing base are fastened to the electrical interface mounting surface via screws. In this implementation, the first direct current output interface housing base is fastened to the electrical interface mounting surface via four screws. The four screws are fastened to four corners of the first direct current output interface housing base. The first direct current output interface housing body is circular. This helps provide space for fastening the four corners of the first direct current output interface housing base via the screws.

In this implementation, because the electrical interface includes two first direct current output interfaces arranged in the second direction, the first direct current output interface housing base is set to be square, so that a long edge and a wide edge of the first direct current output interface fit the electrical interface mounting surface. This helps reduce an area occupied by the first direct current output interface in the first direction.

In a possible implementation, the second direct current output interface includes a second direct current output interface housing and a second direct current output interface electrochemical cell body. The second direct current output interface electrochemical cell body is configured to be electrically connected to an output end of the direct current conversion module. The second direct current output interface housing includes a second direct current output interface housing body and a second direct current output interface housing base that are integrally disposed. The second direct current output interface electrochemical cell body is fastened to an inner side of the second direct current output interface housing body. The second direct current output interface housing body is shaped like a runway. The second direct current output interface housing base is fastened to the electrical interface mounting surface. The second direct current output interface housing base is rectangular, and a width of the second direct current output interface housing base is greater than a height of the second direct current output interface housing base. The height is the distance in the arrangement direction between the bottom edge and the top edge of the electrical interface mounting surface. The width is the distance in the arrangement direction between the two side edges of the electrical interface mounting surface.

In this implementation, the second direct current output interface housing base is fastened to the electrical interface mounting surface via four screws. The four screws are fastened to four corners of the second direct current output interface housing base. The second direct current output interface housing body is shaped like the runway, and four corners of the second direct current output interface housing body are in arc shapes. This helps provide space for fastening the four corners of the second direct current output interface housing base via the screws.

In this implementation, because the electrical interface mounting surface is the rectangle, that is, the width of the electrical interface mounting surface is greater than the height of the electrical interface mounting surface, the second direct current output interface housing base is set to be rectangular, so that a long edge and a wide edge of the second direct current output interface fit the electrical interface mounting surface. This helps reduce an area occupied by the second direct current output interface in the first direction.

In a possible implementation, the plurality of electrical interfaces further include a signal input interface. The signal input interface is configured to receive or send a control signal. The control signal is used to control running of the power conversion circuit or control running of an external device of the vehicle-mounted charging apparatus. The signal input interface is disposed between the input power interface and the second direct current output interface. In this implementation, the signal input interface is configured to be electrically connected to a vehicle control unit. The vehicle control unit transmits the control signal to the power conversion circuit through the signal input interface. The control signal includes but is not limited to a pulse width modulation (pulse width modulation, PWM) signal, voltage sampling signal, current sampling signal, and the like. The signal input interface is further electrically connected to the external device of the vehicle-mounted charging apparatus, for example, an electronic lock or a charging cable temperature monitoring component, and is configured to send the control signal to the external device, to implement electronic lock driving, charging cable temperature monitoring, and the like. The control signal is also a low-voltage signal. The signal input interface is disposed between the input power interface and the second direct current output interface, to effectively use an area that is on the electrical interface mounting surface of the vehicle-mounted charging apparatus and that is for disposing the electrical interface, and meet a requirement of the input control signal.

In a possible implementation, a spacing between the signal input interface and the input power interface, and a spacing between the signal input interface and the second direct current output interface are greater than a spacing between the signal input interface and any first direct current output interface. The spacing is a distance in the arrangement direction between the two side edges of the electrical interface mounting surface.

Interference generated between the control signal and the high-voltage system is greater than interference generated by the control signal to the low-voltage system. Therefore, in this implementation, the spacing between the signal input interface and the input power interface, and the spacing between the signal input interface and the second direct current output interface are set to be greater than the spacing between the signal input interface and any first direct current output interface. In this way, there is a long spacing between the signal input interface and the input power interface and between the signal input interface and the second direct current output interface . This reduces the interference between the control signal and the high-voltage system, and improves the safety performance of the vehicle-mounted charging apparatus and the vehicle.

In a possible implementation, the first direct current output interface identifier group is disposed between the two first direct current output interfaces. A width of the signal input interface is greater than a width of any first direct current output interface, and is less than a sum of widths of the two first direct current output interfaces and a width of the first direct current output interface identifier group. The height is the distance in the arrangement direction between the bottom edge and the top edge of the electrical interface mounting surface. The width is the distance in the arrangement direction between the two side edges of the electrical interface mounting surface.

In this implementation, the width of the signal input interface is greater than the width of any first direct current output interface, and is less than the sum of the widths of the two first direct current output interfaces and the width of the first direct current output interface identifier group. The width of the signal input interface is limited to an appropriate range. This improves utilization of the electrical interface mounting surface and ensures the electric isolation between the electrical interfaces.

In a possible implementation, the signal input interface is a rectangle, and the signal input interface is adjacent to at least a partial edge of each first direct current output interface. In this implementation, the width of the signal input interface is greater than a height of the signal input interface. The electrical interface mounting surface is the rectangle, and thus setting the signal input interface to be the rectangle facilitates layout of the electrical interface. The signal input interface is adjacent to at least the partial edge of each first direct current output interface. This helps reduce an area occupied by the signal input interface and each first direct current output interface in the first direction, so that the volume of the vehicle-mounted charging apparatus is small.

In a possible implementation, the signal input interface includes a signal input interface housing and a signal input interface electrochemical cell body. The signal input interface electrochemical cell body is configured to be electrically connected to the power conversion circuit. The signal input interface housing includes a signal input interface housing body and a signal input interface housing base that are integrally disposed. The signal input interface electrochemical cell body is fastened to an inner side of the signal input interface housing body. The signal input interface housing body is shaped like a runway. The signal input interface housing base is fastened to the electrical interface mounting surface. The signal input interface housing base is rectangular, and a width of the signal input interface housing base is greater than a height of the signal input interface housing base. The height is the distance in the arrangement direction between the bottom edge and the top edge of the electrical interface mounting surface. The width is the distance in the arrangement direction between the two side edges of the electrical interface mounting surface.

In this implementation, the signal input interface housing base is fastened to the electrical interface mounting surface via four screws. The four screws are fastened to four corners of the signal input interface housing base. The signal input interface housing body is shaped like the runway, and four corners of the signal input interface housing body are in arc shapes. This helps provide space for fastening the four corners of the signal input interface housing base via the screws.

In this implementation, because the electrical interface mounting surface is the rectangle, that is, the width of the electrical interface mounting surface is greater than the height of the electrical interface mounting surface, the signal input interface housing base is set to be rectangular, so that a long edge and a wide edge of the signal input interface fit the electrical interface mounting surface. This helps reduce an area occupied by the signal input interface in the first direction.

In a possible implementation, a signal input identifier group is further disposed on the electrical interface mounting surface. The signal input identifier group is used to identify a function of the signal input interface. A width of the signal input identifier group is less than a width of the signal input interface. A height of the signal input identifier group is less than a height of the signal input interface. The signal input identifier group is located between the signal input interface and the top edge of the electrical interface mounting surface. The height is the distance in the arrangement direction between the bottom edge and the top edge of the electrical interface mounting surface. The width is the distance in the arrangement direction between the two side edges of the electrical interface mounting surface.

In this implementation, the width of the signal input identifier group is less than the width of the signal input interface, and the height of the signal input identifier group is less than the height of the signal input interface.

In this implementation, the signal input identifier group is located in a central area of the signal input interface in the second direction, so that an area between the signal input interface and the top edge of the electrical interface mounting surface is effectively used. In addition, the signal input identifier group is used to identify the signal input interface, to avoid the misoperation during use, and improve the safety of the electrical connection.

In a possible implementation, the two first direct current output interfaces are symmetrically disposed on the electrical interface mounting surface, the second direct current output interface and the input power interface are symmetrically disposed along a line of symmetry of the two first direct current output interfaces, and the signal input interface is symmetrical along the line of symmetry of the two first direct current output interfaces.

In this implementation, both the two first direct current output interfaces and the signal input interface are located in a central area of the electrical interface mounting surface in the second direction. The input power interface and the second direct current output interface are respectively disposed in the areas close to the two side edges. A layout manner of the electrical interface in this solution is used, so that there is a large spacing both separately between the signal input interface and the input power interface and between the signal input interface and the second direct current output interface in the second direction, to implement electric isolation between the control signal and the high-voltage system.

In a possible implementation, the housing includes another surface opposite to the electrical interface mounting surface. A coolant inlet and a coolant outlet are disposed on the another surface. One end of the coolant inlet communicates with one end of the coolant outlet through a cooling channel of the housing, and the other end of the coolant inlet and the other end of the coolant outlet are configured to be connected to a cooling apparatus.

In this implementation, the coolant inlet and the coolant outlet are located in a central area on the another surface. Coolant enters the cooling channel of the housing through the coolant inlet. When a component in the power conversion circuit works, a large amount of heat is generated. The coolant and a component that generates heat exchange heat, to reduce a temperature of the power conversion circuit in a steady working state. High-temperature coolant flowing out of the coolant outlet is cooled by the external cooling apparatus, and then enters the cooling channel of the housing through the coolant inlet, to implement recycling of the coolant. In this solution, the coolant inlet, the coolant outlet, and the electrical interface are disposed on different surfaces of the vehicle-mounted charging apparatus. This helps reduce operation difficulty of the electrical connection and mechanical connection, avoid adverse impact of the coolant on the electrical interface, and improve the safety performance of the vehicle-mounted charging apparatus.

In an implementation, the coolant inlet and the coolant outlet are arranged in the second direction. In an implementation, the coolant inlet and the coolant outlet are symmetrically disposed on the another surface.

In a possible implementation, a coolant inlet identifier group and a coolant outlet identifier group are further disposed on the another surface. The coolant inlet identifier group and the coolant outlet identifier group are used to identify and distinguish a position of the coolant inlet and a position of the coolant outlet. The coolant inlet identifier group and the coolant outlet identifier group are located in an area between the coolant inlet and the coolant outlet and are disposed close to the bottom edge of the another surface.

In the solution, without increasing the volume of the vehicle-mounted charging apparatus, the coolant inlet identifier group and the coolant outlet identifier group are disposed in the another area that is on the another surface of the vehicle-mounted charging apparatus except the coolant inlet and the coolant outlet, so that space utilization of the another surface is improved. The coolant inlet identifier group and the coolant outlet identifier group are used to identify the coolant inlet and the coolant outlet, to avoid the misoperation during use, and improve safety of the mechanical connection.

According to a second aspect, this application provides a vehicle, including a battery, a first-type load, and a vehicle-mounted charging apparatus. The vehicle-mounted charging apparatus includes a power conversion circuit and a housing. The power conversion circuit is configured to convert an input power supply into at least one of a first direct current or a second direct current. A voltage of the first direct current is lower than a voltage of the second direct current. The housing is configured to accommodate the power conversion circuit. The housing includes an electrical interface mounting surface. The electrical interface mounting surface is configured to mount a plurality of electrical interfaces. The plurality of electrical interfaces include one input power interface, two first direct current output interfaces, and one second direct current output interface. The input power interface is configured to be connected to an input end of the power conversion circuit. Each first direct current output interface is configured to be connected to the first-type load and provide the first direct current for the first-type load. The second direct current output interface is configured to be connected to the battery and output the second direct current to charge the battery.

In this solution, the vehicle-mounted charging apparatus is used in the vehicle. This facilitates a vehicle layout, improves assembly simplicity, and reduces costs.

### BRIEF DESCRIPTION OF DRAWINGS

To describe technical solutions in embodiments of this application more clearly, the following describes the accompanying drawings used in describing embodiments of this application.
FIG. 1 is a schematic diagram of a structure of a vehicle according to an embodiment of this application;
FIG. 2 is a schematic diagram of an application scenario of a vehicle-mounted charging apparatus according to an embodiment of this application;
FIG. 3a is a schematic diagram of a structure of a vehicle-mounted charging apparatus according to an embodiment of this application;
FIG. 3b is a three-dimensional schematic diagram of a vehicle-mounted charging apparatus according to an embodiment of this application;
FIG. 4 is a schematic diagram of a structure of an electrical interface mounting surface of a vehicle-mounted charging apparatus according to an embodiment of this application;
FIG. 5 is a schematic diagram of a structure of a vehicle-mounted charging apparatus according to an embodiment of this application;
FIG. 6 is a schematic diagram of a structure of a vehicle-mounted charging apparatus according to another embodiment of this application;
FIG. 7 is a schematic diagram of a structure of an electrical interface mounting surface of a vehicle-mounted charging apparatus according to an embodiment of this application;
FIG. 8 is a schematic diagram of a structure of an electrical interface mounting surface of a vehicle-mounted charging apparatus according to an embodiment of this application;
FIG. 9 is a schematic diagram of a structure of an electrical interface mounting surface of a vehicle-mounted charging apparatus according to an embodiment of this application;
FIG. 10 is a schematic diagram of a structure of an electrical interface mounting surface of a vehicle-mounted charging apparatus according to an embodiment of this application;
FIG. 11 is a schematic diagram of a structure of an electrical interface mounting surface of a vehicle-mounted charging apparatus according to an embodiment of this application;
FIG. 12 is a schematic diagram of a structure of an electrical interface mounting surface of a vehicle-mounted charging apparatus according to an embodiment of this application;
FIG. 13 is a schematic diagram of a structure of an electrical interface mounting surface of a vehicle-mounted charging apparatus according to an embodiment of this application;
FIG. 14 is a schematic diagram of a structure of an electrical interface mounting surface of a vehicle-mounted charging apparatus according to an embodiment of this application;
FIG. 15 is a schematic diagram of a structure of an electrical interface mounting surface of a vehicle-mounted charging apparatus according to an embodiment of this application;
FIG. 15a is a three-dimensional schematic diagram of a vehicle-mounted charging apparatus according to an embodiment of this application;
FIG. 16 is a schematic diagram of a structure of an electrical interface mounting surface of a vehicle-mounted charging apparatus according to an embodiment of this application;
FIG. 17 is a schematic diagram of a structure of an electrical interface mounting surface of a vehicle-mounted charging apparatus according to an embodiment of this application;
FIG. 18 is a schematic diagram of a structure of an electrical interface mounting surface of a vehicle-mounted charging apparatus according to an embodiment of this application;
FIG. 19 is a schematic diagram of a structure of an electrical interface mounting surface of a vehicle-mounted charging apparatus according to an embodiment of this application;
FIG. 20 is a schematic diagram of a structure of an electrical interface mounting surface of a vehicle-mounted charging apparatus according to an embodiment of this application;
FIG. 21 is a schematic diagram of a structure of an electrical interface mounting surface of a vehicle-mounted charging apparatus according to an embodiment of this application;
FIG. 22a is a schematic diagram of a structure of another surface of a vehicle-mounted charging apparatus according to an embodiment of this application; and
FIG. 22b is a three-dimensional schematic diagram of another surface of a vehicle-mounted charging apparatus according to an embodiment of this application.

### DESCRIPTION OF EMBODIMENTS

The following describes technical solutions in embodiments of this application with reference to the accompanying drawings in embodiments of this application. It is clear that the described embodiments are merely some rather than all of embodiments of this application.

The terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes English abbreviations and related technical terms used in embodiments of this application.

DCDC: DC is short for Direct Current. DCDC is an apparatus that converts a direct current power supply at a voltage level into a direct current power supply at another voltage level. DCDC is divided into two types, a boost power supply and a buck power supply, based on a voltage level conversion relationship, for example, a DCDC converter connected to a vehicle-mounted direct current power supply converts a high-voltage direct current into a low-voltage direct current.

Parallel: Parallel defined in this application is not limited to absolute parallel. The definition of parallel may be understood as basic parallel. A case in which non-absolute parallel is caused by an assembly tolerance, a design tolerance, structural flatness, or a like factor is allowed.

Perpendicularity: Perpendicularity defined in this application is not limited to an absolute perpendicular intersection relationship (in which an included angle is 90 degrees). A non-absolute perpendicular intersection relationship caused by an assembly tolerance, a design tolerance, structural flatness, or a like factor is allowed. An error within a small angle range, for example, within an assembly error range of 80 degrees to 100 degrees of a range, is allowed. This may be understood as a perpendicular relationship.

Symmetry: Symmetry defined in this application is not limited to an absolute symmetric relationship. A non-absolute symmetric relationship caused by an assembly tolerance, a design tolerance, structural flatness, or a like factor is allowed. An error within a small size range, for example, within an error range of 10% of a range, is allowed. This may be understood as a symmetrical relationship.

This application provides a vehicle-mounted charging apparatus for an electric vehicle. The vehicle-mounted charging apparatus is configured to supply power to a load in the electric vehicle. The vehicle-mounted charging apparatus includes a power conversion circuit and a housing. The housing is configured to accommodate the power conversion circuit. The housing includes an electrical interface mounting surface, a plurality of electrical interfaces are disposed on the electrical interface mounting surface, and the plurality of electrical interfaces include one input power interface, two first direct current output interfaces, and one second direct current output interface. These electrical interfaces provide electric energy transmission channels for the vehicle-mounted charging apparatus to supply power to the load. The input power interface is configured to be connected to an input end of the power conversion circuit, and receive an input power supply. The power conversion circuit is configured to convert the input power supply into at least one of a first direct current or a second direct current. A voltage of the first direct current is lower than a voltage of the second direct current. Each first direct current output interface is configured to receive the first direct current and supply power to a first-type load of the electric vehicle. The second direct current output interface is configured to receive the second direct current and supply power to a second-type load of the electric vehicle. The input power interface, the two first direct current output interfaces, and the second direct current output interface that are provided in the vehicle-mounted charging apparatus in this application are all disposed on the electrical interface mounting surface, so that the electrical interfaces are distributed in a more centralized manner, and are highly integrated. In this way, this helps facilitate a vehicle layout, improve assembly simplicity, and reduce costs. In addition, the two first direct current output interfaces are provided for supplying power to different loads, so that the vehicle-mounted charging apparatus may adapt to more types of loads, and meet different power supply requirements of electric vehicle loads.

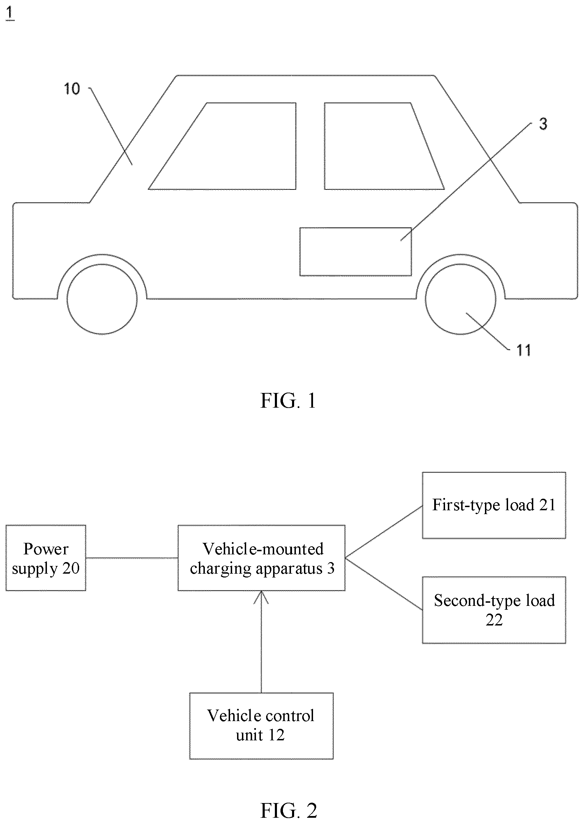

FIG. 1 is a schematic diagram of a structure of a vehicle 1 according to an embodiment of this application. In a possible implementation, the vehicle 1 includes a vehicle body 10 and wheels 11, and a vehicle-mounted charging apparatus 3 is mounted on the vehicle body 10. The vehicle-mounted charging apparatus 3 is configured to supply electric energy to each electrical component in the vehicle 1 and drive the wheels 11 to rotate.

The vehicle 1 is a wheeled vehicle 1 that is driven or towed by a power apparatus and is used for a passenger to travel on a road or for transporting an article and performing a special engineering operation. The vehicle 1 includes an electric vehicle (Electric Vehicle, EV), a pure electric vehicle/battery electric vehicle (Pure Electric VehicleBattery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), a new energy vehicle (New Energy Vehicle, NEV), and the like. In some embodiments, the vehicle 1 includes a passenger vehicle, various special working vehicles having specific functions, for example, an engineering emergency vehicle, a water spraying vehicle, a suction sewage truck, a cement mixer vehicle, a carriage hoist, and a medical vehicle. The vehicle 1 may alternatively be a robot for traveling. There may be three or more wheels 11 of the vehicle 1. This is not limited in this application.

FIG. 2 is a schematic diagram of an application scenario of the vehicle-mounted charging apparatus 3 according to an embodiment of this application. In a possible implementation, the vehicle-mounted charging apparatus 3 is electrically connected to a power supply 20, a vehicle control unit 12, a first-type load 21, and a second-type load 22.

In an embodiment of this application, the power supply 20 may be an alternating current grid, an alternating current charging pile, or an uninterruptible power supply (uninterruptible power supply, UPS). In this case, the power supply 20 is an alternating current power supply. The vehicle-mounted charging apparatus 3 is configured to be electrically connected to the power supply 20 and receive an alternating current. For example, the vehicle-mounted charging apparatus 3 converts the received alternating current into a direct current. The vehicle-mounted charging apparatus 3 also provides the direct current to supply power to the first-type load 21 and the second-type load 22.

In an embodiment of this application, the power supply 20 may be a direct current charging pile. The vehicle-mounted charging apparatus 3 is configured to be electrically connected to the power supply 20 and receive a direct current. In this case, the power supply 20 is a direct current power supply. For example, after converting the received direct current, the vehicle-mounted charging apparatus 3 separately supplies power to the first-type load 21 and the second-type load 22.

In an embodiment of this application, the first-type load 21 is a low-voltage load. For example, the first-type load 21 includes at least one of a low-voltage battery, a car lamp, a windshield wiper, an air conditioner, audio, a USB interface, an instrument panel, or a control display. For example, the low-voltage battery may alternatively supply power to another first-type load 21.

In an embodiment of this application, the second-type load 22 is a high-voltage load. For example, the second-type load 22 may be a battery. For example, the battery is used to supply power to a compressor, a battery heating module, a seat heating module, a power system, and the like. When the battery is used to supply power to a motor in the power system, the battery may also be referred to as a power battery.

The vehicle-mounted charging apparatus 3 is electrically connected to the vehicle control unit 12. The vehicle control unit 12 is configured to send a control signal to the vehicle-mounted charging apparatus 3, to optimize energy distribution of a vehicle.

It may be understood that, to implement electrical connection between the vehicle-mounted charging apparatus 3 and the power supply 20, the first-type load 21, the second-type load 22, or the vehicle control unit 12 mentioned above, a corresponding electrical interface needs to be disposed outside the vehicle-mounted charging apparatus 3. In addition, because an electrical device inside the vehicle-mounted charging apparatus 3 may generate heat when the electrical device is in a working state, a mechanical interface for coolant to flow in or flow out needs to be disposed outside the vehicle-mounted charging apparatus 3. If a complex layout of the electrical interface is not adjusted and optimized, space that is used for disposing the mechanical interface and that is outside the vehicle-mounted charging apparatus 3 may be limited. Consequently, a volume of the vehicle-mounted charging apparatus 3 becomes large. This is not conducive to a vehicle layout and assembly, and an excessively large volume also leads to higher costs.

In embodiments of this application, the vehicle-mounted charging apparatus 3 is improved, and an external interface of the vehicle-mounted charging apparatus 3 is appropriately arranged, so that the vehicle-mounted charging apparatus 3 is highly integrated. This facilitates the vehicle layout, improves assembly simplicity of a vehicle, and reduces costs. The following describes in detail the vehicle-mounted charging apparatus 3 in this application.

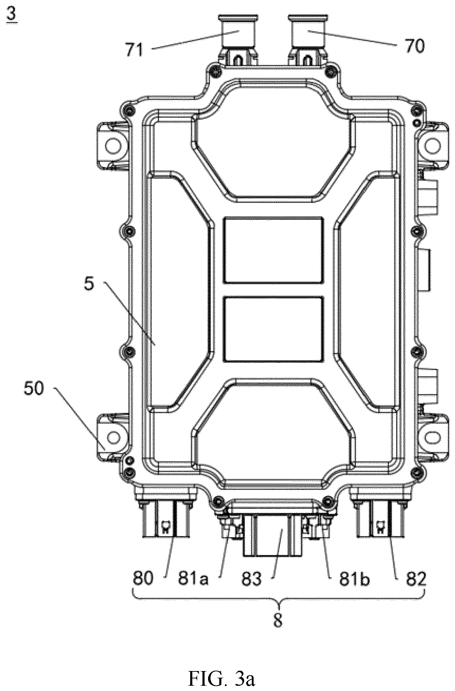

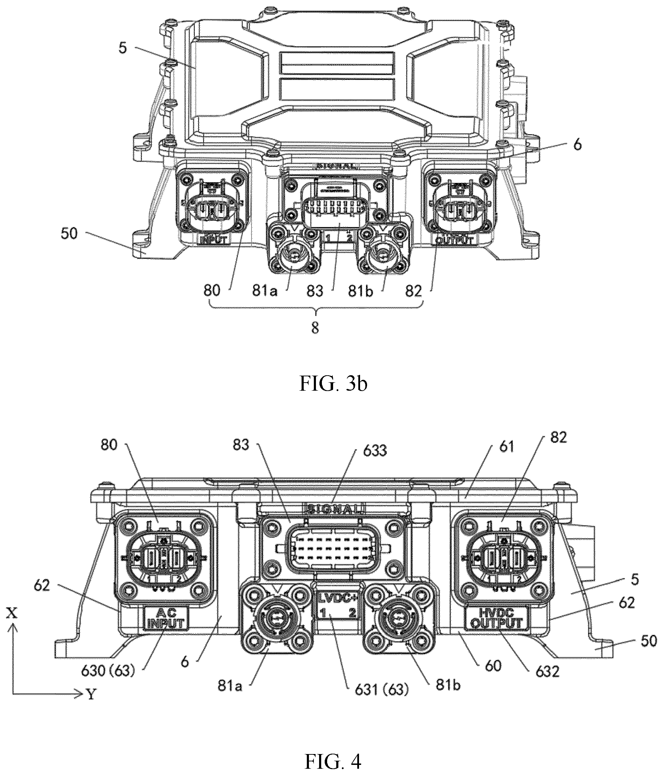

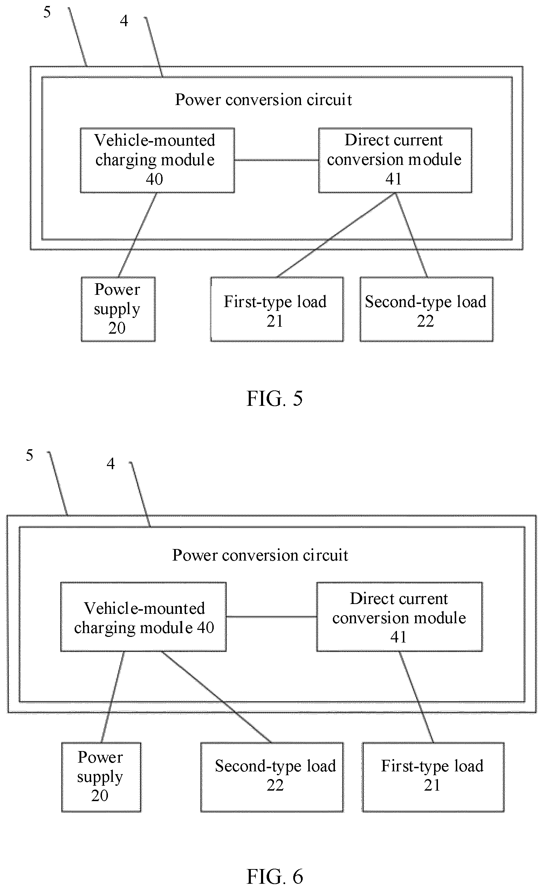

Refer to FIG. 3a to FIG. 5. FIG. 3a is a schematic diagram of a structure of the vehicle-mounted charging apparatus 3 according to an embodiment of this application, FIG. 3b is a three-dimensional schematic diagram of the vehicle-mounted charging apparatus 3 according to an embodiment of this application, FIG. 4 is a schematic diagram of a structure of an electrical interface mounting surface 6 of the vehicle-mounted charging apparatus 3 according to an embodiment of this application, and FIG. 5 is a schematic diagram of a structure of the vehicle-mounted charging apparatus 3 according to an embodiment of this application. This application provides the vehicle-mounted charging apparatus 3, including a power conversion circuit 4 and a housing 5 (as shown in FIG. 3a and FIG. 5). The housing 5 is configured to accommodate the power conversion circuit 4. The housing 5 includes an electrical interface mounting surface 6, a plurality of electrical interfaces 8 are disposed on the electrical interface mounting surface 6 (as shown in FIG. 3a), and the plurality of electrical interfaces 8 include one input power interface 80, two first direct current output interfaces 81a and 81b, and one second direct current output interface 82 (as shown in FIG. 4). These electrical interfaces 8 provide a condition for the vehicle-mounted charging apparatus 3 to supply power to a load.

The input power interface 80 is configured to be connected to an input end of the power conversion circuit 4. The input power interface 80 is configured to receive an input power supply and transmit the input power supply to the power conversion circuit 4. The power conversion circuit 4 is configured to convert the input power supply into at least one of a first direct current or a second direct current. A voltage of the first direct current is lower than a voltage of the second direct current.

Each first direct current output interface is configured to receive the first direct current and supply power to the first-type load 21 of the electric vehicle 1. The second direct current output interface 82 is configured to receive the second direct current and supply power to the second-type load 22 of the electric vehicle 1.

In this implementation, the input power interface 80 is electrically connected to the power supply 20, and is configured to transmit an alternating current to the power conversion circuit 4. The two first direct current output interfaces 81a and 81b are electrically connected to two first-type loads 21, the first-type load 21 receives the first direct current transmitted by the first direct current output interface, and the two first direct current output interfaces 81a and 81b are respectively electrically connected to the two first-type loads 21, to supply power to the first-type load 21.

The second direct current output interface 82 is electrically connected to the second-type load 22, and the second-type load 22 receives the second direct current transmitted by the second direct current output interface 82. The voltage of the first direct current is lower than the voltage of the second direct current. The first-type load 21 is a low-voltage load, and the second-type load 22 is a high-voltage load. In an implementation, a voltage of the first direct current is 12 V, and a voltage of the second direct current is 200 V to 750 V In another implementation, specific voltage values of the first direct current and the second direct current may be set based on a requirement, but the voltage of the first direct current needs to be less than the voltage of the second direct current.

In an implementation, the power conversion circuit 4 includes a vehicle-mounted charging module 40 and a direct current conversion module 41 (as shown in FIG. 5). The vehicle-mounted charging module 40 is configured to convert, into a direct current, the alternating current input from the input power interface 80. The direct current conversion module 41 is configured to convert the direct current into the first direct current and the second direct current, and separately supply power to the first-type load 21 and the second-type load 22 through the first direct current output interface and the second direct current output interface 82 (as shown in FIG. 4 and FIG. 5). The input power interface 80 is an alternating current input interface, and is configured to receive the alternating current provided by the power supply 20 and transmit the alternating current to the vehicle-mounted charging module 40. The vehicle-mounted charging module 40 is configured to convert the alternating current into the direct current.

Refer to FIG. 4 and FIG. 6. FIG. 6 is a schematic diagram of a structure of the vehicle-mounted charging apparatus 3 according to another embodiment of this application. In another implementation, the power conversion circuit 4 includes the vehicle-mounted charging module 40 and the direct current conversion module 41 (as shown in FIG. 6). The vehicle-mounted charging module 40 is configured to convert, into a first direct current, an alternating current input from the input power interface 80, and supply power to the first-type load 21 (as shown in FIG. 4 and FIG. 6), and the direct current conversion module 41 is configured to convert the first direct current into a second direct current and supply power to the second-type load 22 (as shown in FIG. 4 and FIG. 6). The input power interface 80 is an alternating current input interface, and is configured to receive the alternating current provided by the power supply 20 and transmit the alternating current to the vehicle-mounted charging module 40. The vehicle-mounted charging module 40 is configured to convert the alternating current into the first direct current.

In this application, two first direct current output interfaces 81a and 81b are disposed on a same side of the vehicle-mounted charging apparatus 3. In comparison with only one direct current output interface disposed outside the vehicle-mounted charging apparatus 3, the vehicle-mounted charging apparatus 3 in this application may simultaneously supply power to more first-type loads 21, to meet a charging requirement of a low-voltage load. In addition, in comparison with the plurality of electrical interfaces 8 disposed on different sides of the vehicle-mounted charging apparatus 3, in the vehicle-mounted charging apparatus 3 of this application, the input power interface 80, the two first direct current output interfaces 81a and 81b, and the second direct current output interface 82 are disposed on a same side, so that the electrical interfaces are distributed in a more centralized manner, and are highly integrated. An electrical connection operation is simple, space utilization of a single surface is high, and space is provided for disposing different types of external interfaces on other surfaces. This helps reduce a volume of the vehicle-mounted charging apparatus 3, so that the vehicle-mounted charging apparatus 3 is highly integrated, and helps facilitate a vehicle layout, improves assembly simplicity of a vehicle, and reduces costs.

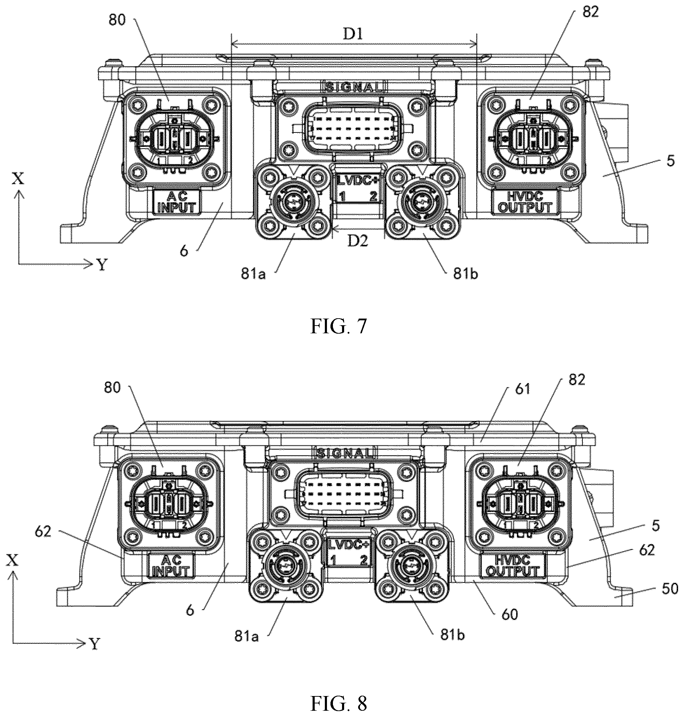

Refer to FIG. 7. FIG. 7 is a schematic diagram of a structure of the electrical interface mounting surface 6 of the vehicle-mounted charging apparatus 3 according to an embodiment of this application. In a possible implementation, the two first direct current output interfaces 81a and 81b, the input power interface 80, and the second direct current output interface 82 are spaced from each other on the electrical interface mounting surface 6, and a spacing between the input power interface 80 and the second direct current output interface 82 is greater than a spacing between the two first direct current output interfaces 81a and 81b.

The input power interface 80 and the second direct current output interface 82 are configured to transmit power energy, and belong to a high-voltage system. The two first direct current output interfaces 81a and 81b are configured to be electrically connected to a low-voltage load, and belong to a low-voltage system. In this implementation, the two first direct current output interfaces 81a and 81b, the input power interface 80, and the second direct current output interface 82 are spaced from each other. This helps avoid interference caused by the high-voltage system to the low-voltage system.

A dimension value of the spacing between the input power interface 80 and the second direct current output interface 82 is D1, and a dimension value of the spacing between the two first direct current output interfaces 81a and 81b is D2. Electrical interference generated between high-voltage systems is greater than interference generated by a high voltage to a low voltage. Therefore, in this implementation, D 1>D2 is set. In this way, an accident can be prevented, and safety performance of the vehicle-mounted charging apparatus 3 and the vehicle 1 is improved.

FIG. 8 is a schematic diagram of a structure of the electrical interface mounting surface 6 of the vehicle-mounted charging apparatus 3 according to an embodiment of this application. In a possible implementation, the electrical interface mounting surface 6 includes a bottom edge 60 and a top edge 61 that are disposed opposite to each other, the two first direct current output interfaces 81a and 81b are aligned along one of the bottom edge 60 and the top edge 61, and the input power interface 80 and the second direct current output interface 82 are aligned along the other one of the bottom edge 60 and the top edge 61.

In an implementation, the housing 5 includes legs 50 that are spaced from each other, and the leg 50 is configured to support and fasten the vehicle-mounted charging apparatus 3. The electrical interface mounting surface 6 on which the electrical interface 8 is located includes the bottom edge 60 and the top edge 61 that are disposed opposite to each other, an edge close to the leg 50 is the bottom edge 60, an edge away from the leg 50 is the top edge 61, and two edges that are disposed opposite to each other between the bottom edge 60 and the top edge 61 are two side edges 62. A direction from the top edge 61 to the bottom edge 60 is designated as a first direction X. A direction from one side edge 62 to the other side edge 62 is designated as a second direction Y The first direction X is perpendicular to the second direction Y.

In this implementation, the two first direct current output interfaces 81a and 81b are arranged close to the bottom edge 60 and are aligned in the second direction Y, and the input power interface 80 and the second direct current output interface 82 are arranged close to the top edge 61 and are aligned in the second direction Y. The input power interface 80 and the second direct current output interface 82 that belong to the high-voltage system and the two first direct current output interfaces 81a and 81b that belong to the low-voltage system are mutually staggered in the first direction X, to improve electrical insulation. In this way, an accident can be prevented, and safety performance of the vehicle-mounted charging apparatus 3 and the vehicle 1 is improved.

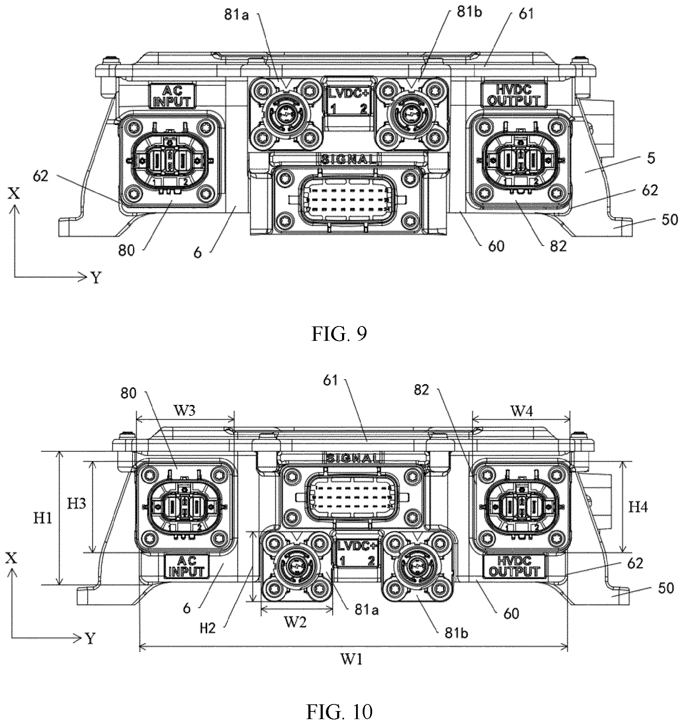

In an implementation, the spacing D1 and the spacing D2 in FIG. 7 are spacings in the second direction Y FIG. 9 is a schematic diagram of a structure of the electrical interface mounting surface 6 of the vehicle-mounted charging apparatus 3 according to an embodiment of this application. In another implementation, the two first direct current output interfaces 81a and 81b are arranged close to the top edge 61 and are aligned in the second direction Y (as shown in FIG. 9), and the input power interface 80 and the second direct current output interface 82 are arranged close to the bottom edge 60 and are aligned in the second direction Y (as shown in FIG. 9). Alignment in the second direction Y indicates that a connection line between centers of two electrical interfaces 8 is parallel to the second direction Y. In this solution, the two first direct current output interfaces 81a and 81b and the input power interface 80, and the second direct current output interface 82 are respectively disposed on the bottom edge 60 and the top edge 61 of the electrical interface mounting surface 6, so that the input power interface 80 and the second direct current output interface 82 that belong to a high-voltage system and the two first direct current output interfaces 81a and 81b that belong to a low-voltage system are mutually staggered in the first direction X, to improve electrical insulation. In this way, an accident can be prevented, and safety performance of the vehicle-mounted charging apparatus 3 and the vehicle 1 is improved. In addition, this also helps provide space for disposing another electrical interface 8 on the electrical interface mounting surface 6, and improve integration of the vehicle-mounted charging apparatus 3.

FIG. 10 is a schematic diagram of a structure of the electrical interface mounting surface 6 of the vehicle-mounted charging apparatus 3 according to an embodiment of this application. In a possible implementation, a height of the electrical interface mounting surface 6 is less than a sum of a height of one first direct current output interface and a height of the input power interface 80 or the second direct current output interface 82. A width of the electrical interface mounting surface 6 is greater than a sum of widths of the first direct current output interface and the input power interface 80 or the second direct current output interface 82 that are adjacently arranged. The input power interface 80 and the second direct current output interface 82 are respectively disposed close to the two side edges 62 of the electrical interface mounting surface 6. The two first direct current output interfaces 81a and 81b are arranged close to the bottom edge 60 or the top edge 61 of the electrical interface mounting surface 6. The two first direct current output interfaces 81a and 81b are arranged between the input power interface 80 and the second direct current output interface 82. A part of the two first direct current output interfaces 81a and 81b is located in an area between the input power interface 80 and the second direct current output interface 82. The height is a distance in an arrangement direction between the bottom edge 60 and the top edge 61 of the electrical interface mounting surface 6, and the width is a distance in an arrangement direction between the two side edges 62 of the electrical interface mounting surface 6.

The height is a dimension value in the first direction X. In this implementation, the height of the electrical interface mounting surface 6 is H1, and is a vertical distance between the bottom edge 60 and the top edge 61. A height of a first direct current output interface 81a or 81b is H2, a height of the input power interface 80 is H3, a height of the second direct current output interface 82 is H4, and HI <H2+H3, or HI <H2+H4 is set, so that the first direct current output interface 81a or 81b and the input power interface 80 or the second direct current output interface 82 cannot be aligned in the first direction X. The first direct current output interfaces 81a and 81b are disposed between the input power interface 80 and the second direct current output interface 82. In this way, electrical interfaces 8 are compactly arranged in the first direction X on the electrical interface mounting surface 6, and the height of the electrical interface mounting surface 6 can be controlled within a small range when an electrical connection requirement is met.

The part of the two first direct current output interfaces 81a and 81b is located in the area between the input power interface 80 and the second direct current output interface 82, that is, projection that is of the two first direct current output interfaces 81a and 81b and that is on the side edge 62 in the second direction Y partially overlaps projection that is of the input power interface 80 and the second direct current output interface 82 and that is on the side edge 62 in the second direction Y, so that a high-voltage interface and a low-voltage interface are arranged in a staggered manner in the first direction X, to improve space utilization of the electrical interface mounting surface 6.

The width is a dimension value in the second direction Y. In this implementation, a width of the electrical interface mounting surface 6 is W1 (as shown in FIG. 10), a width of the first direct current output interface is W2, a width of the input power interface 80 is W3, a width of the second direct current output interface 82 is W4, and W1>W2+W3, or W1>W2+W4 is set, so that the electrical interface mounting surface 6 is wide enough in the second direction Y, and the electrical interfaces 8 can be spaced from each other in the second direction Y. In this way, the electrical interfaces 8 are compactly arranged in the first direction X on the electrical interface mounting surface 6, and are spaced in the second direction Y. The width and the height of the electrical interface mounting surface 6 can be controlled within a small range when an electrical connection safety specification is met. The input power interface 80 and the second direct current output interface 82 are respectively disposed in areas close to the two side edges 62, so that a spacing between two high-voltage interfaces can be effectively increased, and electrical interference is prevented.

In this solution, the height, the width and layout of the electrical interface 8 is appropriately set, and an area of the electrical interface mounting surface 6 of the vehicle-mounted charging apparatus 3 is fully used. This facilitates a miniaturization design of the vehicle-mounted charging apparatus 3 and the vehicle layout, and also ensures electric isolation between the electrical interfaces 8, to improve safety performance.

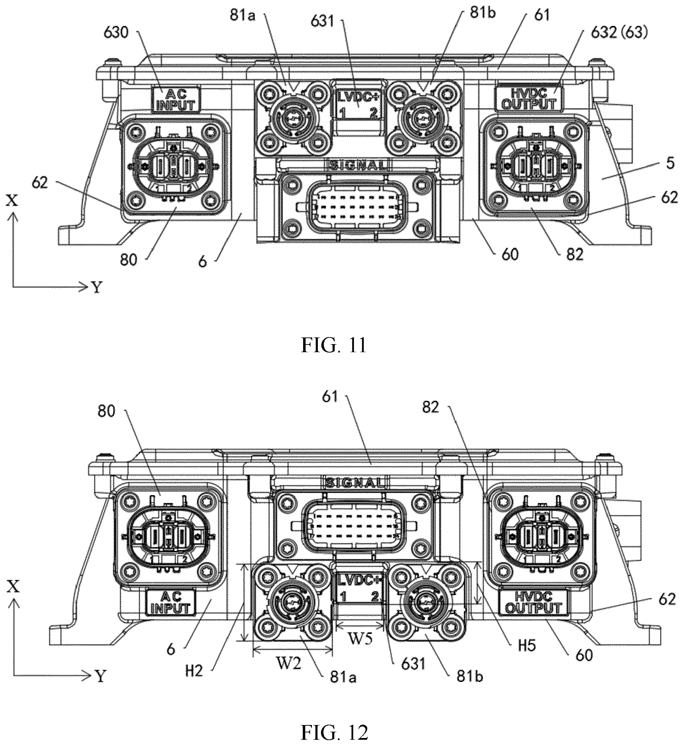

Refer to FIG. 4 and FIG. 11. FIG. 11 is a schematic diagram of a structure of the electrical interface mounting surface 6 of the vehicle-mounted charging apparatus 3 according to an embodiment of this application. In a possible implementation, a plurality of identifier groups 63 are further disposed on the electrical interface mounting surface 6 (as shown in FIG. 4 and FIG. 11), the plurality of identifier groups 63 are used to identify functions of a plurality of electrical interfaces 8, and any one of the plurality of identifier groups 63 is disposed between two adjacent ones of the plurality of electrical interfaces 8, for example, one of the plurality of identifier groups 63 is located between the two first direct current output interfaces 81a and 81b (as shown in FIG. 4).

Alternatively, any one of the plurality of identifier groups 63 is disposed between any one of the plurality of electrical interfaces 8 and the top edge 61 of the electrical interface mounting surface 6, for example, one of the plurality of identifier groups 63 is located between the second direct current output interface 82 and the top edge 61 (as shown in FIG. 11). Alternatively, any one of the plurality of identifier groups 63 is disposed between any one of the plurality of electrical interfaces 8 and the bottom edge 60 of the electrical interface mounting surface 6, for example, one of the plurality of identifier groups 63 is located between the input power interface 80 and the bottom edge 60 (as shown in FIG. 4).

In this solution, without increasing a volume of the vehicle-mounted charging apparatus 3, the plurality of identifier groups 63 are disposed at different positions of the electrical interface mounting surface 6, so that a remaining area of the electrical interface mounting surface 6 except the electrical interface 8 is flexibly used. The plurality of identifier groups 63 are used to identify different electrical interfaces 8. This facilitates an electrical connection operation. FIG. 12 is a schematic diagram of a structure of the electrical interface mounting surface 6 of the vehicle-mounted charging apparatus 3 according to an embodiment of this application. In a possible implementation, the plurality of identifier groups 63 include a first direct current output interface identifier group 631, the first direct current output interface identifier group 631 is disposed between the two first direct current output interfaces 81a and 81b, and the first direct current output interface identifier group 631 is used to identify functions of the two first direct current output interfaces 81a and 81b.

In this implementation, a width of the first direct current output interface identifier group 631 is W5, a height of the first direct current output interface identifier group 631 is H5, the width of the first direct current output interface identifier group 631 is less than a width of each first direct current output interface, that is, W5<W2, the height of the first direct current output interface identifier group 631 is less than a height of each first direct current output interface, that is, H5<H2, and in the first direction X, the first direct current output interface identifier group 631 is closer to the side edges 62 that are of the two first direct current output interfaces 81a and 81b and that are close to a top plate.

In this embodiment, the first direct current output interface identifier group 631 includes two rows of identifiers arranged in the first direction X. A first row of identifiers is "LVDC+". A second row of identifiers includes "1" and "2", and "1" and "2" are spaced from each other in the second direction Y, where "1" is close to the first direct current output interface 81a and is used to identify the first direct current output interface 81a, and "2" is close to the first direct current output interface 81b and is used to identify the first direct current output interface 81b.

In this solution, without increasing a volume of the vehicle-mounted charging apparatus 3, the first direct current output interface identifier group 631 is disposed between the two first direct current output interfaces 81a and 81b, so that a remaining area of the electrical interface mounting surface 6 except the electrical interface 8 is flexibly used, and the first direct current output interface identifier group 631 is set into two rows, to avoid occupying an excessive size in the second direction Y, and make full use of a spacing area between the two first direct current output interfaces 81a and 81b. The first direct current output interface identifier group 631 is used to identify the two first direct current output interfaces 81a and 81b, to avoid a misoperation during use, and improve safety of electrical connection.

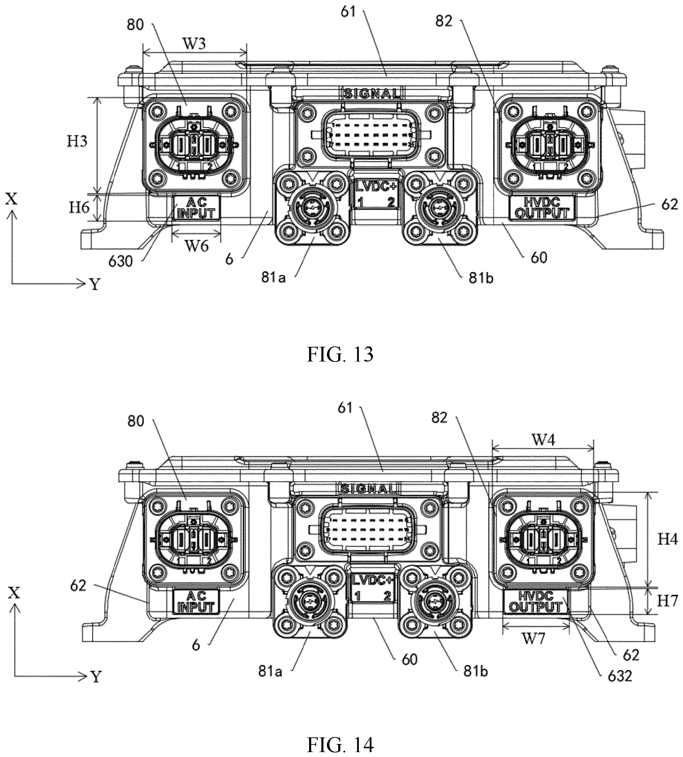

FIG. 13 is a schematic diagram of a structure of the electrical interface mounting surface 6 of the vehicle-mounted charging apparatus 3 according to an embodiment of this application. In a possible implementation, a plurality of identifier groups 63 include an input power identifier group 630, the input power identifier group 630 includes two rows of identifiers, and the two rows of identifiers are arranged in parallel between the input power interface 80 and the top edge 61 or the side edge 62 of the electrical interface mounting surface 6.

In this implementation, a width of the input power identifier group 630 is W6, a height of the input power identifier group 630 is H6, the width of the input power identifier group 630 is less than a width of the input power interface 80, that is, W6<W3, and the height of the input power identifier group 630 is less than a height of the input power interface 80, that is, H6<H3.

In this implementation, the input power identifier group 630 includes two rows of identifiers arranged in the first direction X. A first row of identifiers is "AC". A second row of identifiers is "INPUT". When the input power identifier group 630 is disposed between the input power interface 80 and the bottom edge 60, "AC" is closer to the input power interface 80 than "INPUT" (as shown in FIG. 13). When the input power identifier group 630 is disposed between the input power interface 80 and the top edge 61, "INPUT" is closer to the input power interface 80 than "AC" (as shown in FIG. 11). The input power identifier group 630 is set as the two rows of identifiers. This helps reduce the width of the input power identifier group 630 and avoids occupying an excessive size in the second direction Y A spacing area between the input power interface 80 and the top edge 61 or the bottom edge is fully used, so that an area occupied by the input power identifier group 630 on the electrical interface mounting surface 6 can be controlled within a small range.

In this solution, without increasing a volume of the vehicle-mounted charging apparatus 3, the input power identifier group 630 is disposed between the input power interface 80 and the bottom edge 60 or the top edge 61 of the electrical interface mounting surface 6, so that a remaining area of the electrical interface mounting surface 6 except the electrical interface 8 is flexibly used. The input power identifier group 630 is used to identify the input power interface 80, to avoid a misoperation during use, and improve safety of electrical connection.

FIG. 14 is a schematic diagram of a structure of the electrical interface mounting surface 6 of the vehicle-mounted charging apparatus 3 according to an embodiment of this application. In a possible implementation, a plurality of identifier groups 63 include a second direct current output interface identifier group 632, the second direct current output interface identifier group 632 includes two rows of identifiers, and the two rows of identifiers are arranged in parallel between the second direct current output interface 82 and the top edge 61 or the side edge 62 of the electrical interface mounting surface 6.

In this implementation, a width of the second direct current output interface identifier group 632 is W7, a height of the second direct current output interface identifier group 632 is H7, the width of the second direct current output interface identifier group 632 is less than a width of the second direct current output interface 82, that is, W7<W4, and the height of the second direct current output interface identifier group 632 is less than a height of the second direct current output interface 82, that is, H7<H4.

In this implementation, the second direct current output interface identifier group 632 includes the two rows of identifiers arranged in the first direction X. A first row of identifiers is "HVDC". A second row of identifiers is "OUTPUT". When the second direct current output interface identifier group 632 is disposed between the second direct current output interface 82 and the bottom edge 60, "HVDC" is closer to the input power interface 80 than "OUTPUT" (as shown in FIG. 14). When the second direct current output interface identifier group 632 is disposed between the second direct current output interface 82 and the top edge 61, "OUTPUT" is closer to the second direct current output interface 82 than "HVDC" (as shown in FIG. 11). The second direct current output interface identifier group 632 is set as the two rows of identifiers. This helps reduce the width of the second direct current output interface identifier group 632 and avoids occupying an excessive size in the second direction Y A spacing area between the second direct current output interface 82 and the top edge 61 or the bottom edge is fully used, so that an area occupied by the second direct current output interface identifier group 632 on the electrical interface mounting surface 6 can be controlled within a small range.

In this solution, without increasing a volume of the vehicle-mounted charging apparatus 3, the second direct current output interface identifier group 632 is disposed between the second direct current output interface 82 and the bottom edge 60 or the top edge 61 of the electrical interface mounting surface 6, so that a remaining area of the electrical interface mounting surface 6 except the electrical interface 8 is flexibly used. The second direct current output interface identifier group 632 is used to identify the second direct current output interface 82, to avoid a misoperation during use, and improve safety of electrical connection.

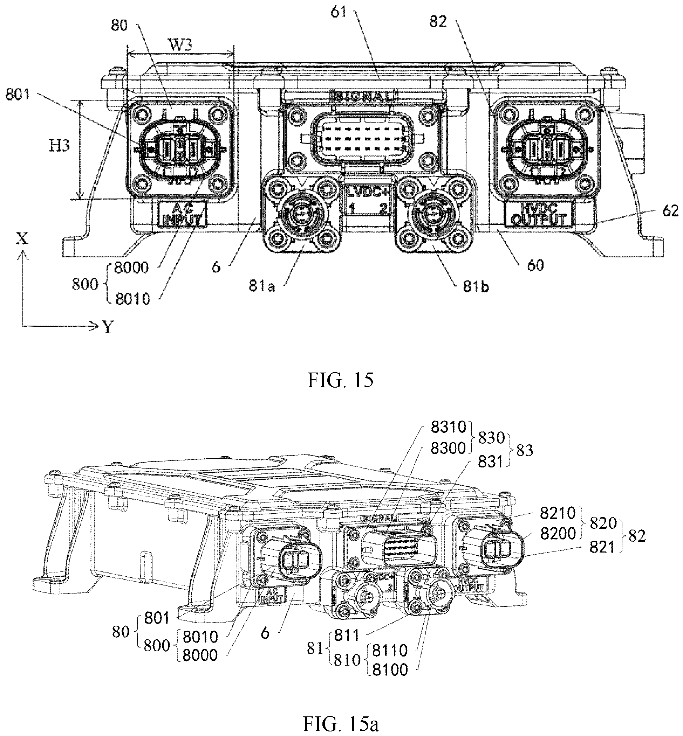

Refer to FIG. 15 and FIG. 15a. FIG. 15 is a schematic diagram of a structure of the electrical interface mounting surface 6 of the vehicle-mounted charging apparatus 3 according to an embodiment of this application. FIG. 15a is a three-dimensional schematic diagram of the vehicle-mounted charging apparatus 3 according to an embodiment of this application. In a possible implementation, the input power interface 80 includes an input power interface housing 800 and an input power interface electrochemical cell body 801 (as shown in FIG. 15 and FIG. 15a). The input power interface electrochemical cell body 801 is configured to be electrically connected to an input end of a direct current conversion module 41. The input power interface housing 800 includes an input power interface housing body 8000 and an input power interface housing base 8010 (as shown in FIG. 15 and FIG. 15a) that are integrally disposed. The input power interface electrochemical cell body 801 is fastened to an inner side (as shown in FIG. 15a) of the input power interface housing body 8000. The input power interface housing body 8000 is shaped like a runway (as shown in FIG. 15). The input power interface housing base 8010 is fastened to the electrical interface mounting surface 6 (as shown in FIG. 15a). The input power interface housing base 8010 is rectangular (as shown in FIG. 15). A width of the input power interface housing base 8010 is greater than a height (as shown in FIG. 15) of the input power interface housing base 8010. The height is a distance in an arrangement direction between the bottom edge 60 and the top edge 61 of the electrical interface mounting surface 6. The width is a distance in an arrangement direction between the two side edges 62 of the electrical interface mounting surface 6.

In this implementation, the input power interface housing base 8010 is fastened to the electrical interface mounting surface 6 via four screws. The four screws are fastened to four corners of the input power interface housing base 8010. The input power interface housing body 8000 is shaped like the runway, and four corners of the input power interface housing body 8000 are in arc shapes. This helps provide space for fastening the four corners of the input power interface housing base 8010 via the screws.

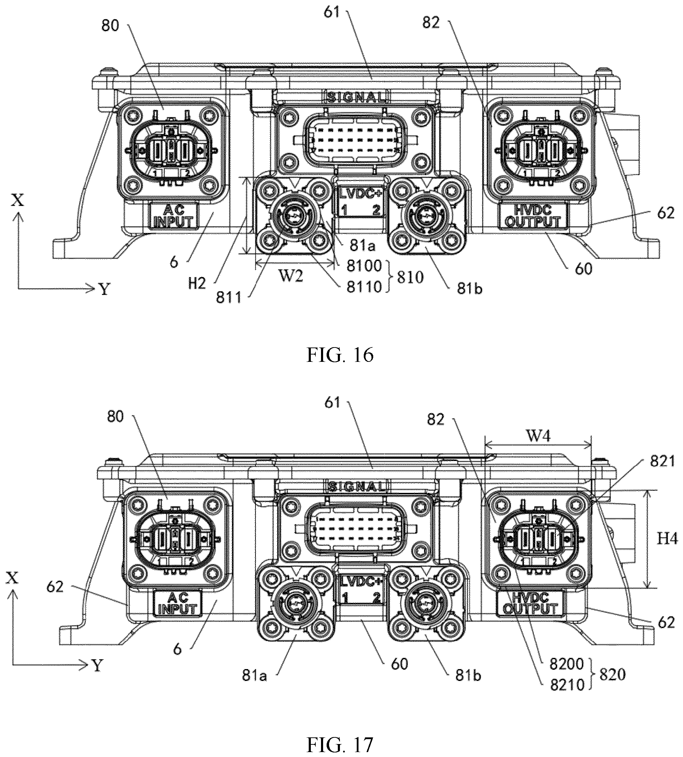

In this implementation, a width of the input power interface housing base 8010 is W3, namely, a width of the input power interface 80, and a height of the input power interface housing base 8010 is H3, namely, a height of the input power interface 80. Because the electrical interface mounting surface 6 is a rectangle, that is, a width of the electrical interface mounting surface 6 is greater than a height of the electrical interface mounting surface 6, the input power interface housing base 8010 is set to be rectangular, that is, W3>H3, so that a long edge and a wide edge of the input power interface 80 fit the electrical interface mounting surface 6. This helps reduce an area occupied by the input power interface 80 in the first direction X, and reserve space for disposing the input power identifier group 630. Refer to FIG. 15a and FIG. 16. FIG. 16 is a schematic diagram of a structure of the electrical interface mounting surface 6 of the vehicle-mounted charging apparatus 3 according to an embodiment of this application. In a possible implementation, the first direct current output interfaces 81a and 81b each include a first direct current output interface housing 810 and a first direct current output interface electrochemical cell body 811 (as shown in FIG. 15a and FIG. 16). The first direct current output interface electrochemical cell body 811 is configured to be electrically connected to the direct current conversion module 41. The first direct current output interface housing 810 includes a first direct current output interface housing body 8100 and a first direct current output interface housing base 8110 (as shown in FIG. 15a and FIG. 16) that are integrally disposed. The first direct current output interface electrochemical cell body 811 is fastened to an inner side (as shown in FIG. 15a) of the first direct current output interface housing body 8100. The first direct current output interface housing body 8100 is circular (as shown in FIG. 16). The first direct current output interface housing base 8110 is fastened to the electrical interface mounting surface 6 (as shown in FIG. 15a). The first direct current output interface housing base 8110 is square (as shown in FIG. 16), and four corners of the first direct current output interface housing base 8110 are fastened to the electrical interface mounting surface 6 (as shown in FIG. 16) via screws.

In this implementation, the first direct current output interface housing base 8110 is fastened to the electrical interface mounting surface 6 via four screws. The four screws are fastened to the four corners of the first direct current output interface housing base 8110. The first direct current output interface housing body 8100 is circular. This helps provide space for fastening the four corners of the first direct current output interface housing base 8110 via the screws.

In this implementation, a width of the first direct current output interface housing base 8110 is W2, namely, a width of a first direct current output interface, and a height of the first direct current output interface housing base 8110 is H2, namely, a height of the first direct current output interface. Because the electrical interfaces 8 include two first direct current output interfaces arranged in the second direction Y, the first direct current output interface housing base 8110 is set to be square, that is, W2=H2, so that a long edge and a wide edge of the first direct current output interface fit the electrical interface mounting surface 6. This helps reduce an area occupied by the first direct current output interface in the first direction X.

In an implementation, structures of the two first direct current output interfaces 81a and 81b are the same.

Refer to FIG. 15a and FIG. 17. FIG. 17 is a schematic diagram of a structure of the electrical interface mounting surface 6 of the vehicle-mounted charging apparatus 3 according to an embodiment of this application. In a possible implementation, the second direct current output interface 82 includes a second direct current output interface housing 820 and a second direct current output interface electrochemical cell body 821 (as shown in FIG. 15a and FIG. 17). The second direct current output interface electrochemical cell body 821 is configured to be electrically connected to an output end of the direct current conversion module 41. The second direct current output interface housing 820 includes a second direct current output interface housing body 8200 and a second direct current output interface housing base 8210 (as shown in FIG. 15a and FIG. 17) that are integrally disposed. The second direct current output interface electrochemical cell body 821 is fastened to an inner side of the second direct current output interface housing body 8200 (as shown in FIG. 15a). The second direct current output interface housing body 8200 is shaped like a runway (as shown in FIG. 17). The second direct current output interface housing base 8210 is fastened to the electrical interface mounting surface 6 (as shown in FIG. 15a). The second direct current output interface housing base 8210 is rectangular (as shown in FIG. 17), and a width of the second direct current output interface housing base 8210 is greater than a height of the second direct current output interface housing base 8210 (as shown in FIG. 17). The height is a distance in an arrangement direction between the bottom edge 60 and the top edge 61 of the electrical interface mounting surface 6. The width is a distance in an arrangement direction between the two side edges 62 of the electrical interface mounting surface 6.

In this implementation, the second direct current output interface housing base 8210 is fastened to the electrical interface mounting surface 6 via four screws. The four screws are fastened to four corners of the second direct current output interface housing base 8210. The second direct current output interface housing body 8200 is shaped like the runway, and four corners of the second direct current output interface housing body 8200 are in arc shapes. This helps provide space for fastening the four corners of the second direct current output interface housing base 8210 via the screws.

In this implementation, a width of the second direct current output interface housing base 8210 is W4, namely, a width of the second direct current output interface 82, and a height of the second direct current output interface housing base 8210 is H4, namely, a height of the second direct current output interface 82. Because the electrical interface mounting surface 6 is a rectangle, that is, a width of the electrical interface mounting surface 6 is greater than a height of the electrical interface mounting surface 6, the second direct current output interface housing base 8210 is set to be rectangular, that is, W4>H4, so that a long edge and a wide edge of the second direct current output interface 82 fit the electrical interface mounting surface 6. This helps reduce an area occupied by the second direct current output interface 82 in the first direction X.

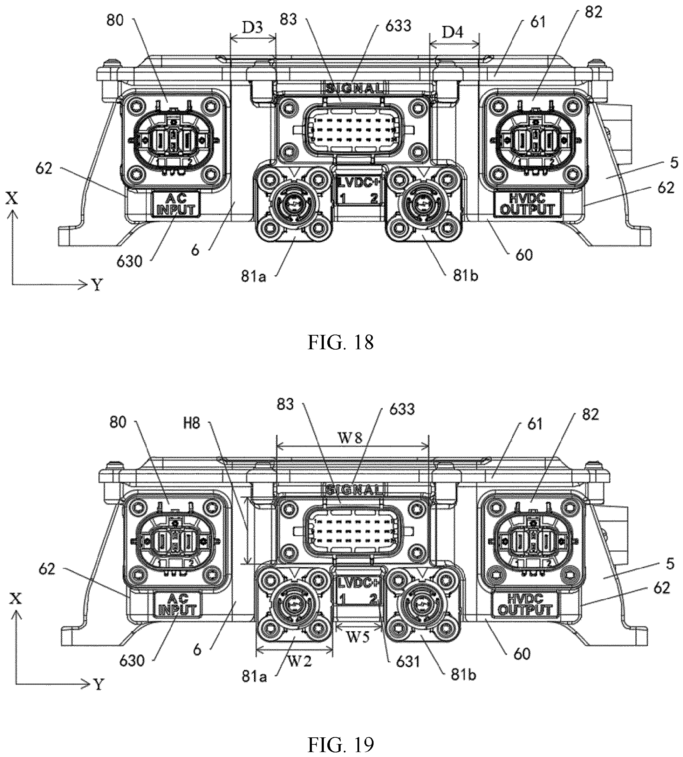

FIG. 18 is a schematic diagram of a structure of the electrical interface mounting surface 6 of the vehicle-mounted charging apparatus 3 according to an embodiment of this application. In a possible implementation, a plurality of electrical interfaces 8 further include a signal input interface 83. The signal input interface 83 is configured to receive or send a control signal. The control signal is used to control running of the power conversion circuit 4 or control running of an external device of the vehicle-mounted charging apparatus. The signal input interface 83 is disposed between the input power interface 80 and the second direct current output interface 82.

In this implementation, the signal input interface 83 is configured to be electrically connected to a vehicle control unit. The vehicle control unit transmits the control signal to the power conversion circuit 4 through the signal input interface 83. The control signal includes but is not limited to pulse width modulation (pulse width modulation, PWM) signal, voltage sampling signal, current sampling signal, and the like. The signal input interface 83 is further electrically connected to the external device of the vehicle-mounted charging apparatus, for example, an electronic lock or a charging cable temperature monitoring component, and is configured to send the control signal to the external device, to implement electronic lock driving, charging cable temperature monitoring, and the like. The control signal is also a low-voltage signal. The signal input interface 83 is disposed between the input power interface 80 and the second direct current output interface 82, to effectively use an area that is on the electrical interface mounting surface 6 of the vehicle-mounted charging apparatus 3 and that is for disposing the electrical interface 8, and meet a requirement of the input control signal.

Still refer to FIG. 18. In a possible implementation, a spacing between the signal input interface 83 and the input power interface 80, and a spacing between the signal input interface 83 and the second direct current output interface 82 are greater than a spacing between the signal input interface 83 and either of the first direct current output interfaces 81a and 81b. The spacing is a distance in an arrangement direction between the two side edges 62 of the electrical interface mounting surface 6.

A dimension value of the spacing between the signal input interface 83 and the input power interface 80 is D3, a dimension value of the spacing between the signal input interface 83 and the second direct current output interface 82 is D4, and a dimension value of the spacing between the signal input interface 83 and either of the first direct current output interfaces 81a and 81b is D5 (not shown in FIG. 18). Interference generated between the control signal and a high-voltage system is greater than interference generated by the control signal to a low-voltage system. Therefore, in this implementation, D3>D5, and D4>D5 are set. In this way, there is a long spacing between the signal input interface 83 and the input power interface 80 and between signal input interfaces 83. This reduces the interference between the control signal and the high-voltage system, and improves the safety performance of the vehicle-mounted charging apparatus 3 and the vehicle 1. In FIG. 18, the signal input interface 83 partially overlaps either of the first direct current output interfaces 81a and 81b in the second direction Y, so that D5 is 0.

FIG. 19 is a schematic diagram of a structure of the electrical interface mounting surface 6 of the vehicle-mounted charging apparatus 3 according to an embodiment of this application. In a possible implementation, the first direct current output interface identifier group 631 is disposed between the two first direct current output interfaces 81a and 81b. A width of the signal input interface 83 is greater than a width of any one of the first direct current output interfaces 81a and 81b, and is less than a sum of widths of the two first direct current output interfaces 81a and 81b and a width of the first direct current output interface identifier group 631. A height is a distance in an arrangement direction between the bottom edge 60 and the top edge 61 of the electrical interface mounting surface 6. The width is a distance in an arrangement direction between the two side edges 62 of the electrical interface mounting surface 6.

A width of the signal input interface 83 is W8, and a height of the signal input interface 83 is H8. In this implementation, the width of the signal input interface 83 meets W2<W8<(W2+W2+W5). The width of the signal input interface 83 is limited to an appropriate range. This improves utilization of the electrical interface mounting surface 6 and ensures electric isolation between the electrical interfaces 8.

In an implementation, a ratio of the height of the signal input interface 83 to a height of each of the first direct current output interfaces 81a and 81b is greater than or equal to 0.5 and less than or equal to 1. A ratio of the width of the signal input interface 83 to the width of each of the first direct current output interfaces 81a and 81b is greater than 2 and less than 2.5.

Still refer to FIG. 19. In a possible implementation, the signal input interface 83 is a rectangle, and the signal input interface 83 is adjacent to at least a partial edge of each of the first direct current output interfaces 81a and 81b. In this implementation, the width of the signal input interface 83 is greater than the height of the signal input interface 83, that is, W8>H8. The electrical interface mounting surface 6 is a rectangle, and thus setting the signal input interface 83 to be the rectangle facilitates layout of the electrical interface 8. The signal input interface 83 is adjacent to at least the partial edge of each of the first direct current output interfaces 81a and 81b. This helps reduce an area occupied by the signal input interface 83 and each of the first direct current output interfaces 81a and 81b in the first direction X, so that a volume of the vehicle-mounted charging apparatus 3 is small.

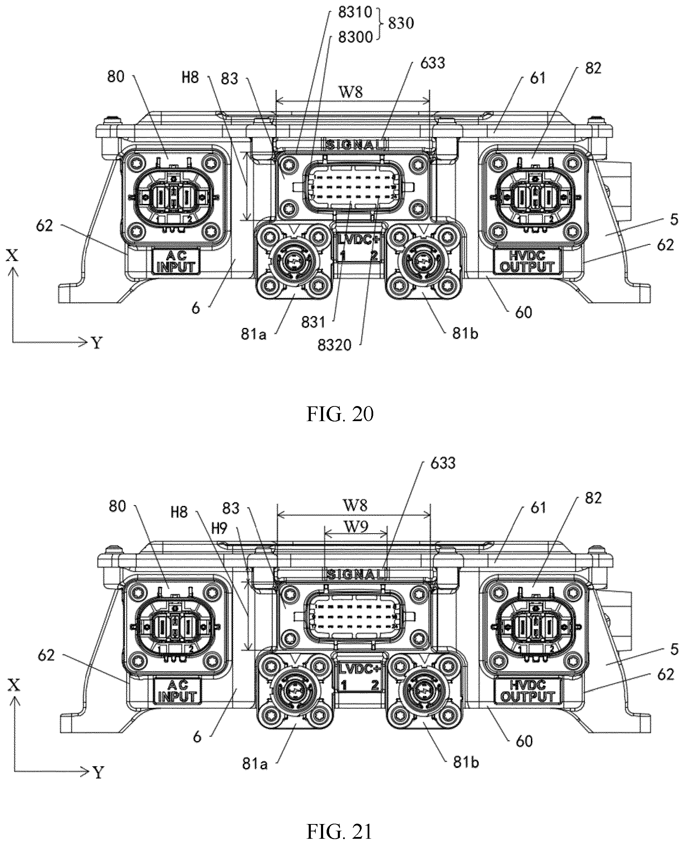

Refer to FIG. 15a and FIG. 20. FIG. 20 is a schematic diagram of a structure of the electrical interface mounting surface 6 of the vehicle-mounted charging apparatus 3 according to an embodiment of this application. In a possible implementation, the signal input interface 83 includes a signal input interface housing 830 and a signal input interface electrochemical cell body 831 (as shown in FIG. 15a and FIG. 20). The signal input interface electrochemical cell body 831 is configured to be electrically connected to the power conversion circuit 4. The signal input interface housing 830 includes a signal input interface housing body 8300 and a signal input interface housing base 8310 that are integrally disposed (as shown in FIG. 15a and FIG. 20). The signal input interface electrochemical cell body 831 is fastened to an inner side of the signal input interface housing body 8300 (as shown in FIG. 15a). The signal input interface housing body 8300 is shaped like a runway (as shown in FIG. 20). The signal input interface housing base 8310 is fastened to the electrical interface mounting surface 6 (as shown in FIG. 15a). The signal input interface housing base 8310 is rectangular (as shown in FIG. 20), and a width of the signal input interface housing base 8310 is greater than a height of the signal input interface housing base 8310 (as shown in FIG. 20). The height is a distance in an arrangement direction between the bottom edge 60 and the top edge 61 of the electrical interface mounting surface 6. The width is a distance in an arrangement direction between the two side edges 62 of the electrical interface mounting surface 6.

In this implementation, the signal input interface housing base 8310 is fastened to the electrical interface mounting surface 6 via four screws. The four screws are fastened to four corners of the signal input interface housing base 8310. The signal input interface housing body 8300 is shaped like the runway, and four corners of the signal input interface housing body 8300 are in arc shapes. This helps provide space for fastening the four corners of the signal input interface housing base 8310 via the screws.

In this implementation, a width of the signal input interface housing base 8310 is W8, namely, a width of the signal input interface 83, and a height of the signal input interface housing base 8310 is H8, namely, a height of the signal input interface 83. Because the electrical interface mounting surface 6 is a rectangle, that is, a width of the electrical interface mounting surface 6 is greater than a height of the electrical interface mounting surface 6, the signal input interface housing base 8310 is set to be rectangular, that is, W8>H8, so that a long edge and a wide edge of the signal input interface 83 fit the electrical interface mounting surface 6. This helps reduce an area occupied by the signal input interface 83 in the first direction X.

In an implementation, the signal input interface electrochemical cell body 831 includes 24 plug-in terminals 8320, and the 24 plug-in terminals 8320 are evenly distributed in three rows of the signal input interface electrochemical cell body 831. In some other implementations, the signal input interface electrochemical cell body 831 may include more than 24 or less than 24 plug-in terminals 8320. Persons skilled in the art may adjust a quantity of plug-in terminals 8320 according to an actual requirement. This is not limited in this application.

FIG. 21 is a schematic diagram of a structure of the electrical interface mounting surface 6 of the vehicle-mounted charging apparatus 3 according to an embodiment of this application. In a possible implementation, a signal input identifier group 633 is further disposed on the electrical interface mounting surface 6. The signal input identifier group 633 is used to identify a function of the signal input interface 83. A width of the signal input identifier group 633 is less than a width of the signal input interface 83. A height of the signal input identifier group 633 is less than a height of the signal input interface 83. The signal input identifier group 633 is located between the signal input interface 83 and the top edge 61 of the electrical interface mounting surface 6. The height is a distance in an arrangement direction between the bottom edge 60 and the top edge 61 of the electrical interface mounting surface 6. The width is a distance in an arrangement direction between the two side edges 62 of the electrical interface mounting surface 6.

In this implementation, a width of the signal input identifier group 633 is W9, and a height of the signal input identifier group 633 is H9. The width of the signal input identifier group 633 is less than a width of the signal input interface 83, that is, W9<W8. The height of the signal input identifier group 633 is less than a height of the signal input interface 83, that is, H9<H8.

In this implementation, the signal input identifier group 633 is located in a central area of the signal input interface 83 in the second direction Y, and the signal input identifier group 633 includes an identifier "SIGNAL", so that an area between the signal input interface 83 and the top edge 61 of the electrical interface mounting surface 6 is effectively used. In addition, the signal input identifier group 633 is used to identify the signal input interface 83, to avoid a misoperation during use, and improve safety of electrical connection.

Still refer to FIG. 21. In a possible implementation, the two first direct current output interfaces 81a and 81b are symmetrically disposed on the electrical interface mounting surface 6, the input power interface 80 and the second direct current output interface 82 are symmetrically disposed along a line of symmetry of the two first direct current output interfaces 81a and 81b, and the signal input interface 83 is symmetrical along the line of symmetry of the two first direct current output interfaces 81a and 81b.

In this implementation, both the two first direct current output interfaces 81a and 81b and the signal input interface 83 are located in a central area of the electrical interface mounting surface 6 in the second direction Y. The input power interface 80 and the second direct current output interface 82 are respectively disposed in areas close to the two side edges 62. A layout manner of the electrical interface 8 in this solution is used, so that there is a large spacing both separately between the signal input interface 83 and the input power interface 80 and between the signal input interface 83 and the second direct current output interface 82 in the second direction Y, to implement electric isolation between a control signal and a high-voltage system.

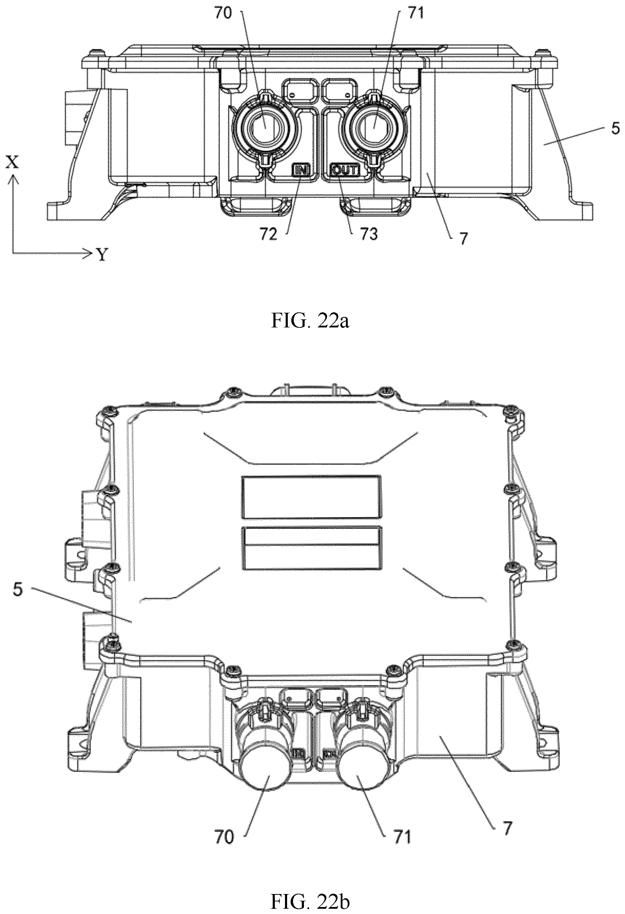

Refer to FIG. 22a and FIG. 22b. FIG. 22a is a schematic diagram of a structure of another surface 7 of the vehicle-mounted charging apparatus 3 according to an embodiment of this application. FIG. 22b is a three-dimensional schematic diagram of another surface 7 of the vehicle-mounted charging apparatus 3 according to an embodiment of this application. The housing 5 of the vehicle-mounted charging apparatus 3 includes another surface 7 opposite to the electrical interface mounting surface 6. The another surface 7 is disposed opposite to the electrical interface mounting surface 6. In a possible implementation, a coolant inlet 70 and a coolant outlet 71 are disposed on the another surface 7. One end of the coolant inlet 70 communicates with one end of the coolant outlet 71 through a cooling channel of the housing 5, and the other end of the coolant inlet 70 and the other end of the coolant outlet 71 are configured to be connected to a cooling apparatus.

In this implementation, the coolant inlet 70 and the coolant outlet 71 are located in a central area on the another surface 7. Coolant enters the cooling channel of the housing 5 through the coolant inlet 70. When a component in the power conversion circuit 4 works, a large amount of heat is generated. The coolant and a component that generates heat exchange heat, to reduce a temperature of the power conversion circuit 4 in a steady working state. High-temperature coolant flowing out of the coolant outlet 71 is cooled by the external cooling apparatus, and then enters the cooling channel of the housing 5 through the coolant inlet 70, to implement recycling of the coolant. In this solution, the coolant inlet 70, the coolant outlet 71, and the electrical interface 8 are disposed on different surfaces of the vehicle-mounted charging apparatus 3. This helps reduce operation difficulty of electrical connection and mechanical connection, avoid adverse impact of the coolant on the electrical interface 8, and improve safety performance of the vehicle-mounted charging apparatus 3.

In an implementation, the coolant inlet 70 and the coolant outlet 71 are arranged in the second direction Y. In an implementation, the coolant inlet 70 and the coolant outlet 71 are symmetrically disposed on the another surface 7.

In an implementation, a coolant inlet identifier group 72 and a coolant outlet identifier group 73 are further disposed on the another surface 7. The coolant inlet identifier group 72 and the coolant outlet identifier group 73 are used to identify and distinguish a position of the coolant inlet 70 and a position of the coolant outlet 71. The coolant inlet identifier group 72 and the coolant outlet identifier group 73 are located in an area between the coolant inlet 70 and the coolant outlet 71 and are disposed close to the bottom edge 60 of the another surface 7. In this embodiment, the coolant inlet identifier group 72 includes an identifier "IN", and the coolant outlet identifier group 73 includes an identifier "OUT".

The vehicle-mounted charging apparatus and the vehicle provided in embodiments of this application are described in detail above. The principles and the implementations of this application are described herein by using specific examples. The description about the foregoing embodiments is merely provided to help understand the method and core ideas of this application. In addition, persons of ordinary skill in the art can make variations and modifications in terms of the specific implementations and application scopes according to the ideas of this application. In conclusion, the content of this specification shall not be construed as a limitation to this application.

## Claims

1. A vehicle-mounted charging apparatus for an electric vehicle, comprising a power conversion circuit and a housing, wherein the power conversion circuit is configured to convert an input power supply into at least one of a first direct current or a second direct current, a voltage of the first direct current is lower than a voltage of the second direct current, the housing is configured to accommodate the power conversion circuit, the housing comprises an electrical interface mounting surface, the electrical interface mounting surface is configured to mount a plurality of electrical interfaces, and the plurality of electrical interfaces comprise one input power interface, two first direct current output interfaces, and one second direct current output interface, wherein
the input power interface is configured to be connected to an input end of the power conversion circuit;
each first direct current output interface is configured to receive the first direct current and supply power to a first-type load of the electric vehicle; and
the second direct current output interface is configured to receive the second direct current and supply power to a second-type load of the electric vehicle.

2. The vehicle-mounted charging apparatus according to claim 1, wherein the two first direct current output interfaces, the input power interface, and the second direct current output interface are spaced from each other on the electrical interface mounting surface, and a spacing between the input power interface and the second direct current output interface is greater than a spacing between the two first direct current output interfaces.

3. The vehicle-mounted charging apparatus according to claim 1 or 2, wherein the electrical interface mounting surface comprises a bottom edge and a top edge that are disposed opposite to each other, the two first direct current output interfaces are aligned along one of the bottom edge and the top edge, and the input power interface and the second direct current output interface are aligned along the other one of the bottom edge and the top edge.

4. The vehicle-mounted charging apparatus according to any one of claims 1 to 3, wherein a height of the electrical interface mounting surface is less than a sum of a height of one first direct current output interface and a height of the input power interface or the second direct current output interface, a width of the electrical interface mounting surface is greater than a sum of widths of the first direct current output interface and the input power interface or the second direct current output interface that are adjacently arranged, the input power interface and the second direct current output interface are respectively disposed close to two side edges of the electrical interface mounting surface, the two first direct current output interfaces are arranged close to a bottom edge or a top edge of the electrical interface mounting surface, the two first direct current output interfaces are arranged between the input power interface and the second direct current output interface, and a part of the two first direct current output interfaces is located in an area between the input power interface and the second direct current output interface; and
the height is a distance in an arrangement direction between the bottom edge and the top edge of the electrical interface mounting surface, and the width is a distance in an arrangement direction between the two side edges of the electrical interface mounting surface.

5. The vehicle-mounted charging apparatus according to any one of claims 1 to 4, wherein a plurality of identifier groups are further disposed on the electrical interface mounting surface, the plurality of identifier groups are used to identify functions of the plurality of electrical interfaces, and any one of the plurality of identifier groups is disposed:
between two adjacent ones of the plurality of electrical interfaces;
between any one of the plurality of electrical interfaces and the top edge of the electrical interface mounting surface; or
between any one of the plurality of electrical interfaces and the bottom edge of the electrical interface mounting surface.

6. The vehicle-mounted charging apparatus according to claim 5, wherein the plurality of identifier groups comprise a first direct current output interface identifier group, the first direct current output interface identifier group is disposed between the two first direct current output interfaces, and the first direct current output interface identifier group is used to identify functions of the two first direct current output interfaces.

7. The vehicle-mounted charging apparatus according to claim 6, wherein the plurality of identifier groups comprise an input power identifier group, the input power identifier group comprises two rows of identifiers, and the two rows of identifiers are arranged in parallel between the input power interface and the top edge or the side edge of the electrical interface mounting surface.

8. The vehicle-mounted charging apparatus according to claims 1 to 7, wherein the input power interface comprises an input power interface housing and an input power interface electrochemical cell body, the input power interface electrochemical cell body is configured to be electrically connected to the input end of the power conversion circuit, the input power interface housing comprises an input power interface housing body and an input power interface housing base that are integrally disposed, the input power interface electrochemical cell body is fastened to an inner side of the input power interface housing body, the input power interface housing body is shaped like a runway, the input power interface housing base is fastened to the electrical interface mounting surface, the input power interface housing base is rectangular, a width of the input power interface housing base is greater than a height of the input power interface housing base, the height is the distance in the arrangement direction between the bottom edge and the top edge of the electrical interface mounting surface, and the width is the distance in the arrangement direction between the two side edges of the electrical interface mounting surface.

9. The vehicle-mounted charging apparatus according to claims 1 to 8, wherein each first direct current output interface comprises a first direct current output interface housing and a first direct current output interface electrochemical cell body, the first direct current output interface electrochemical cell body is configured to be electrically connected to the power conversion circuit, the first direct current output interface housing comprises a first direct current output interface housing body and a first direct current output interface housing base that are integrally disposed, the first direct current output interface electrochemical cell body is fastened to an inner side of the first direct current output interface housing body, the first direct current output interface housing body is circular, the first direct current output interface housing base is fastened to the electrical interface mounting surface, the first direct current output interface housing base is square, and four corners of the first direct current output interface housing base are fastened to the electrical interface mounting surface via screws.

10. The vehicle-mounted charging apparatus according to claims 1 to 9, wherein the plurality of electrical interfaces further comprise a signal input interface, the signal input interface is configured to receive or send a control signal, the control signal is used to control running of the power conversion circuit or control running of an external device of the vehicle-mounted charging apparatus, and the signal input interface is disposed between the input power interface and the second direct current output interface.

11. The vehicle-mounted charging apparatus according to claim 10, wherein a spacing between the signal input interface and the input power interface, and a spacing between the signal input interface and the second direct current output interface are greater than a spacing between the signal input interface and any first direct current output interface, and the spacing is a distance in the arrangement direction between the two side edges of the electrical interface mounting surface.

12. The vehicle-mounted charging apparatus according to claim 10, wherein the first direct current output interface identifier group is disposed between the two first direct current output interfaces, a width of the signal input interface is greater than a width of any first direct current output interface, and is less than a sum of widths of the two first direct current output interfaces and a width of the first direct current output interface identifier group, the height is the distance in the arrangement direction between the bottom edge and the top edge of the electrical interface mounting surface, and the width is the distance in the arrangement direction between the two side edges of the electrical interface mounting surface.

13. The vehicle-mounted charging apparatus according to claim 10, wherein the signal input interface is a rectangle, and the signal input interface is adjacent to at least a partial edge of each first direct current output interface.

14. The vehicle-mounted charging apparatus according to claim 10, wherein a signal input identifier group is further disposed on the electrical interface mounting surface, the signal input identifier group is used to identify a function of the signal input interface, a width of the signal input identifier group is less than a width of the signal input interface, a height of the signal input identifier group is less than a height of the signal input interface, the signal input identifier group is located between the signal input interface and the top edge of the electrical interface mounting surface, the height is the distance in the arrangement direction between the bottom edge and the top edge of the electrical interface mounting surface, and the width is the distance in the arrangement direction between the two side edges of the electrical interface mounting surface.

15. A vehicle, comprising a battery, a first-type load, and a vehicle-mounted charging apparatus, wherein the vehicle-mounted charging apparatus comprises a power conversion circuit and a housing, the power conversion circuit is configured to convert an input power supply into at least one of a first direct current or a second direct current, a voltage of the first direct current is lower than a voltage of the second direct current, the housing is configured to accommodate the power conversion circuit, the housing comprises an electrical interface mounting surface, the electrical interface mounting surface is configured to mount a plurality of electrical interfaces, and the plurality of electrical interfaces comprise one input power interface, two first direct current output interfaces, and one second direct current output interface, wherein
the input power interface is configured to be connected to an input end of the power conversion circuit;
each first direct current output interface is configured to be connected to the first-type load and provide the first direct current for the first-type load; and
the second direct current output interface is configured to be connected to the battery and output the second direct current to charge the battery.
